# EUROPEAN PATENT APPLICATION

(11) **EP 4 693 955 A1**
(43) Date of publication of application: **11.02.2026**
(21) Application number: 24784777.5
(22) Date of filing: 26.03.2024
(51) Int. Cl.: H04B 10/80, H04L 1/00, H04L 1/08

(54) **OPTICAL COMMUNICATION SYSTEM, BASE STATION DEVICE, AND TERMINAL DEVICE**

(30) Priority: 04.04.2023 JP 2023060558
(71) Applicant: Kyocera Corporation, Kyoto-shi, Kyoto 612-8501 (JP)
(72) Inventor: YAMAZAKI, Chiharu, Kyoto-shi, Kyoto 612-8501 (JP)
(74) Representative: Viering, Jentschura & Partner mbB Patent- und Rechtsanwälte
(86) International application number: PCT/JP2024/011801
(87) International publication number: WO 2024/209987

(57) **Abstract**

An optical communication system is an optical communication system for performing optical communication, which is wireless communication using light, underwater, the optical communication system including a base station apparatus configured to form a cell underwater, and a terminal apparatus configured to perform the optical communication with the base station apparatus in the cell. At least one of the base station apparatus or the terminal apparatus performs the optical communication to which time diversity is applied in which optical signal transmission corresponding to identical transmission information is repeatedly performed at a predetermined time interval.

## Description

### TECHNICAL FIELD

The present disclosure relates to an optical communication system, a base station apparatus, and a terminal apparatus.

### BACKGROUND OF INVENTION

An optical communication system is known that, for example, in underwater communication, performs wireless communication (also simply referred to as "optical communication") using light, particularly visible light, as a transmission medium. Since light has high directivity, an optical communication system in the related art generally performs, on the assumption that optical communication apparatuses on a transmitting side and a receiving side are fixed, one-to-one optical communication with the transmitting side and the receiving side facing each other.

In the future, it is expected that cellular operation will be realized in optical communication systems, in which a coverage area will be divided into small regions called cells and a base station apparatus that manages a cell will perform optical communication with a terminal apparatus within the cell. Such an optical communication system is also called a cellular optical communication system.

### CITATION LIST

### PATENT LITERATURE

Patent Document 1: JP No. 4-103232 A

### SUMMARY

An optical communication system according to a first aspect is an optical communication system for performing optical communication, which is wireless communication using light, underwater, the optical communication system including a base station apparatus configured to form a cell underwater, and a terminal apparatus configured to perform the optical communication with the base station apparatus in the cell. At least one of the base station apparatus or the terminal apparatus performs the optical communication to which time diversity is applied in which optical signal transmission corresponding to identical transmission information is repeatedly performed at a predetermined time interval.

A base station apparatus according to a second aspect is a base station apparatus for forming a cell underwater, the base station apparatus including an optical communicator configured to perform optical communication, which is wireless communication using light, with a terminal apparatus within the cell, and a controller configured to control the optical communicator to apply time diversity to the optical communication in which optical signal transmission corresponding to identical transmission information is repeatedly performed at a predetermined time interval.

A terminal apparatus according to a third aspect is a terminal apparatus for performing optical communication, which is wireless communication using light, underwater, the terminal apparatus including an optical communicator configured to perform the optical communication with the base station apparatus in a cell formed by the base station apparatus underwater, and a controller configured to control the optical communicator to apply time diversity to the optical communication in which optical signal transmission corresponding to identical transmission information is repeatedly performed at a predetermined time interval.

### BRIEF DESCRIPTION OF THE DRAWINGS

FIG. 1 is a diagram illustrating an example of a configuration of an optical communication system according to an embodiment.
FIG. 2 is a diagram illustrating another example of a configuration of the optical communication system according to the embodiment.
FIG. 3 is a diagram illustrating a configuration example of a communication frame used in the optical communication system according to the embodiment.
FIG. 4 is a diagram illustrating a configuration example of a base station apparatus according to the embodiment.
FIG. 5 is a diagram illustrating an outer appearance configuration example of the base station apparatus according to the embodiment.
FIG. 6 is a diagram illustrating a configuration example of a terminal apparatus according to the embodiment.
FIG. 7 is a diagram illustrating an outer appearance configuration example of the terminal apparatus according to the embodiment.
FIG. 8 is a diagram for describing spatial multiplexing transmission according to the embodiment.
FIG. 9 is a diagram for describing composite transmission according to the embodiment.
FIG. 10 is a diagram for describing caustics.
FIG. 11 is a diagram illustrating a spatial distribution of light intensity (illuminance) in water.
FIG. 12 is a diagram illustrating a temporal distribution of light intensity (illuminance) at one point underwater.
FIG. 13 is a diagram illustrating an example of a communication sequence when time diversity according to the embodiment is applied to downlink (DL) optical communication.
FIG. 14 is a diagram illustrating an example of a communication sequence when time diversity is applied to uplink (UL) optical communications.
FIG. 15 is a diagram illustrating an example of time diversity control based on a wind speed parameter value according to the embodiment.
FIG. 16 is a diagram illustrating an example of time diversity control based on a wave state parameter value according to the embodiment.
FIG. 17 is a diagram illustrating an example of time diversity control based on an illuminance parameter value according to the embodiment.
FIG. 18 is a diagram illustrating an example of time diversity control based on an angle of incidence parameter value according to the embodiment.
FIG. 19 is a diagram illustrating an example of time diversity control based on a water depth parameter value according to the embodiment.
FIG. 20 is a diagram illustrating an example of time diversity control based on the orientation of a light receiving/emitting element of the base station apparatus according to the embodiment.
FIG. 21 is a diagram illustrating an example of time diversity control based on the orientation of a light receiving/emitting element of the terminal apparatus according to the embodiment.
FIG. 22 is a diagram illustrating a first example of a notification method of time diversity information according to the embodiment.
FIG. 23 is a diagram illustrating a second example of a notification method of time diversity information according to the embodiment.
FIG. 24 is a diagram illustrating a third example of a notification method of time diversity information according to the embodiment.
FIG. 25 is a diagram illustrating a variation of an outer appearance configuration of an optical communication apparatus according to the embodiment.
FIG. 26 is a diagram illustrating a variation of an outer appearance configuration of the optical communication apparatus according to the embodiment.

### DESCRIPTION OF EMBODIMENTS

In optical communication systems, sunlight is a very influential obstruction factor. In particular, in optical communication systems that perform optical communication underwater, a lattice pattern of sunlight-derived light called caustics is generated underwater due to the influence of the gradient distribution of the water surface. In a portion corresponding to a lattice point in this lattice pattern, sunlight with a higher intensity becomes concentrated compared with in the surrounding areas, causing instantaneous large noise in optical communications. Therefore, in optical communication systems that perform optical communication underwater, there is a problem in that it is difficult to appropriately perform optical communication due to the influence of solar noise caused by caustics.

Therefore, the present disclosure aims to appropriately perform optical communication underwater.

An optical communication system according to an embodiment will be described with reference to the drawings. In the description of the drawings, the same or similar parts are denoted by the same or similar reference signs.

The optical communication system according to the embodiment is a system that performs optical communication using visible light as an example of light. However, the optical communication system may be a system that performs optical communication using light such as infrared light other than visible light. The optical communication system according to the embodiment is a system that performs optical communication underwater. Underwater optical communication refers to optical communication in, for example, the ocean, a lake, or a river, but the following embodiment mainly assumes an optical communication system that performs optical communication in the ocean (under the sea).

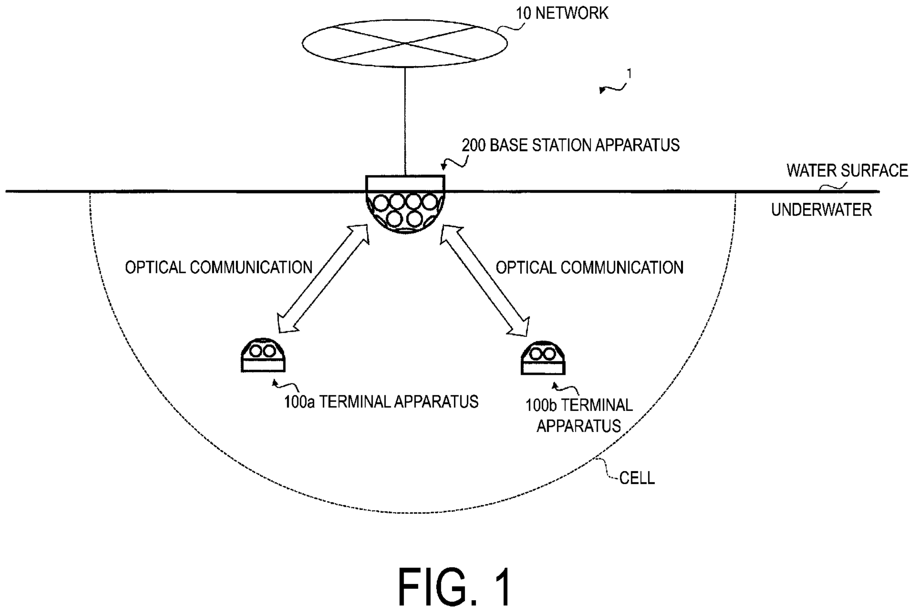

(1) Configuration Example of Optical Communication System First, a configuration example of the optical communication system according to the embodiment will be described. FIG. 1 illustrates an example of a configuration of an optical communication system 1.

In the optical communication system 1, a coverage area is divided into small regions called cells, and a base station apparatus 200 that manages a cell performs optical communication with a terminal apparatus 100 within the cell. In the illustrated example, the optical communication system 1 includes a plurality of terminal apparatuses 100 (100a and 100b) and a base station apparatus 200. However, the number of terminal apparatuses 100 and the number of base station apparatuses 200 are not limited to those in the illustrated example.

Each terminal apparatus 100 is an example of an optical communication apparatus. Each terminal apparatus 100 is underwater. Each terminal apparatus 100 is configured to be movable underwater. For example, each terminal apparatus 100 may be a self-propelled apparatus such as an underwater robot or an underwater drone. The terminal apparatus 100 connects to a base station apparatus 200 that manages the cell in which the terminal apparatus 100 exists (also referred to as a "serving cell"), and performs optical communication with the connected base station apparatus 200 (also referred to as a "serving base station").

Each terminal apparatus 100 includes a plurality of light receivers/emitters whose optical axes (from another point of view, the directivity of optical communication) are oriented in different directions. The light receiver/emitter includes at least one light emitting element and at least one light receiving element. Accordingly, each terminal apparatus 100 can use light as a transmission medium and use a plurality of light receivers/emitters to perform optical communication in various directions.

Each terminal apparatus 100 may include a sensor such as an image sensor and generate sensor data. For example, each terminal apparatus 100 may transmit uplink (UL) data including sensor data to the base station apparatus 200 through optical communication. Each terminal apparatus 100 may receive downlink (DL) data including instruction data from the base station apparatus 200 through the optical communication. The terminal apparatus 100 may move and perform a sensing operation (imaging or the like) based on the instruction data.

The base station apparatus 200 is another example of the optical communication apparatus. In order to construct a wide coverage area underwater, a plurality of base station apparatuses 200 may be installed at intervals in the horizontal direction. The base station apparatus 200 may be installed temporarily, for example, during the period when underwater surveys are carried out using each terminal apparatus 100. Note that in FIG. 1, a cell, which is a communication area of each base station apparatus 200, is indicated by a dashed line.

The base station apparatus 200 has, for example, a buoyant member and is located near the water surface. The base station apparatus 200 is communicatively connected to a network 10 via a backhaul line. The backhaul line may be a wireless line. The backhaul line may be a wired line. The network 10 may include the Internet. The base station apparatus 200 may perform inter-base station communication with another base station apparatus via the network 10.

The base station apparatus 200 includes a plurality of light receivers/emitters whose optical axes are oriented in different directions. The light receiver/emitter includes at least one light emitting element and at least one light receiving element. In the illustrated example, the base station apparatus 200 has a hemispherical housing submerged in water, and a plurality of light receivers/emitters are arranged in an array on the surface of the spherical housing. Accordingly, the base station apparatus 200 can use light as a transmission medium and use a plurality of light receivers/emitters to perform optical communication in various directions.

The base station apparatus 200 selects its own light receiver/emitter corresponding to a direction of each terminal apparatus 100 connected to the base station apparatus 200 and uses the selected light receiver/emitter to perform optical communication with the terminal apparatus 100. Similarly, the terminal apparatus 100 selects its own light receiver/emitter that corresponds to the direction of the base station apparatus 200 that is its serving base station, and performs optical communication with the base station apparatus 200 using the selected light receiver/emitter.

Note that the base station apparatus 200 may transmit a synchronous optical signal and/or a reference optical signal unique to the base station apparatus 200 in all directions from all light receivers/emitters. The terminal apparatus 100 may specify the direction of the base station apparatus 200 based on these optical signals, and may also specify its own light receiver/emitter that corresponds to that direction, and may perform optical communication with the base station apparatus 200 using the specified light receiver/emitter.

Thus, in the optical communication system 1, each of the terminal apparatus 100 and the base station apparatus 200 has a plurality of light receivers/emitters (a plurality of light receivers/emitters) arranged on its surface and selectively uses the light receiver/emitter that corresponds to the direction of the communication partner. The base station apparatus 200 transmits optical signals from a plurality of light emitting elements having different directivities to form a communication area (cell). The base station apparatus 200 covers a wide area by selectively using the light receiver/emitter that corresponds to the direction of the terminal apparatus 100 that has entered its own cell.

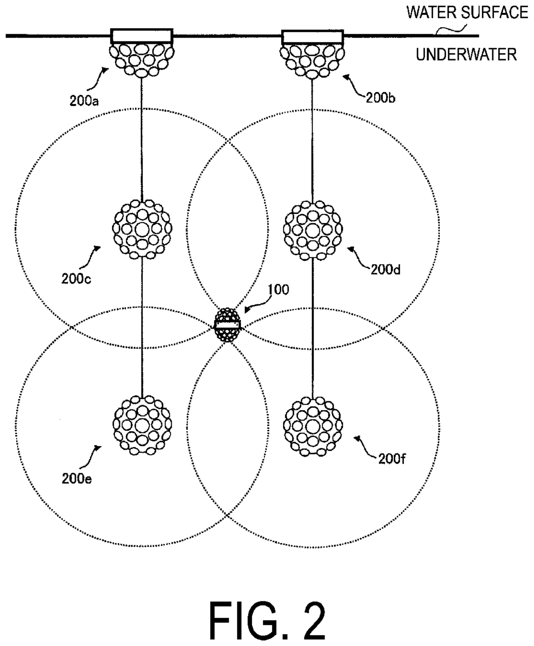

FIG. 2 is a diagram illustrating another example of the configuration of the optical communication system 1. Here, the configuration example of FIG. 2 will be described with respect to differences from the configuration example of FIG. 1. In the configuration example of FIG. 1, the base station apparatus 200 is installed on the water surface. In contrast, in the configuration example of FIG. 2, a plurality of base station apparatuses 200 are disposed three-dimensionally underwater.

Specifically, each of base station apparatuses 200a and 200b is located near a water surface and fixed to, for example, a buoy (floating device). Each of the base station apparatuses 200a and 200b has a hemispherical housing having a surface on which a plurality of light receivers/emitters are arranged in an array. Each of the base station apparatuses 200a and 200b is communicatively connected to the network 10 via the backhaul line.

A base station apparatus 200c is suspended from the base station apparatus 200a via a rope and/or a cable (hereinafter referred to as "cable or the like"). A base station apparatus 200e is suspended from the base station apparatus 200c via a cable or the like. Similarly, a base station apparatus 200d is suspended via a cable or the like from the base station apparatus 200b adjacent to the base station apparatus 200a. A base station apparatus 200f is suspended from the base station apparatus 200d via a cable or the like. Each of the base station apparatuses 200c, 200d, 200e, and 200f has a housing of a spherical shape, and a plurality of optical communicators are arranged in an array on the spherical shape of the housing.

The base station apparatus 200c communicates with the network 10 via the base station apparatus 200a, and the base station apparatus 200e communicates with the network 10 via the base station apparatuses 200a and 200c. Similarly, the base station apparatus 200d communicates with the network 10 via the base station apparatus 200b, and the base station apparatus 200f communicates with the network 10 via the base station apparatuses 200b and 200d.

Note that the base station apparatus 200 may be installed on the bottom of the water. In this case, the terminal apparatus 100 moving underwater performs optical communication with the base station apparatus 200 located below (diagonally below) the terminal apparatus 100. The base station apparatus 200 may be installed on an underwater wall surface. In this case, the terminal apparatus 100 performs optical communication with the base station apparatus 200 while moving vertically underwater.

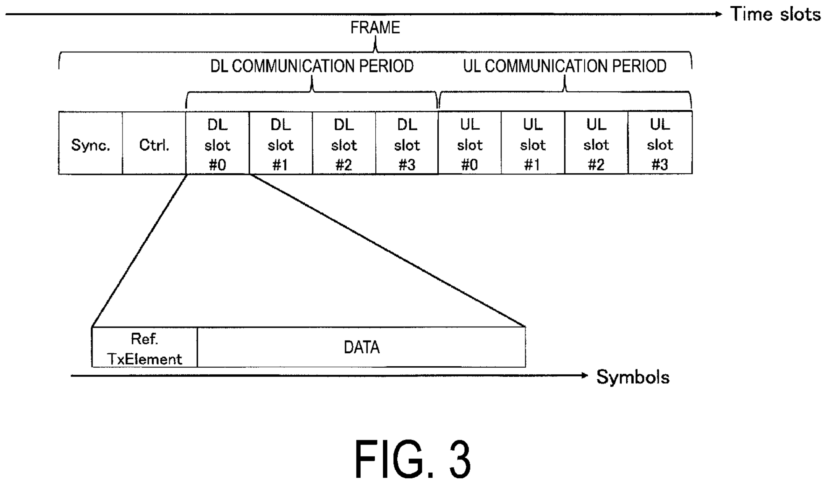

FIG. 3 is a diagram illustrating a configuration example of the communication frame used in the optical communication system 1. Although one communication frame includes 10 time slots in the illustrated example, the number of time slots included in one communication frame is not limited to 10. Note that each of the time slots includes the predetermined number of symbol sections.

In this frame configuration example, the communication frame consists of one synchronization slot (Sync.), one control slot (Ctrl.), four DL slots #0 to #3, and four UL slots #0 to #3. In this regard, in a scenario that a data amount of UL communication is larger than that of DL communication, UL slots in a communication frame may be provided more than DL slots.

The synchronization slot (Sync.) is a time slot in which the base station apparatus 200 transmits a synchronization optical signal (and a reference optical signal unique to the base station apparatus). The terminal apparatus 100 identifies the base station apparatus 200 based on the synchronization optical signal received from the base station apparatus 200, and establishes or maintains synchronization with the base station apparatus 200 by using the synchronization optical signal. Note that the reference optical signal unique to the base station apparatus may be transmitted in all slots other than the UL slot. The reference optical signal is used in the terminal apparatus 100 to measure the intensity of light received from the base station apparatus 200.

The control slot (Ctrl.) is a time slot in which the base station apparatus 200 transmits a control optical signal. The control optical signal includes, for example, scheduling information indicating DL and UL resource allocations (e.g., time slot allocations). The terminal apparatus 100 ascertains own time slot allocation by, for example, a control optical signal received from the base station apparatus 200.

The DL slots #0 to #3 constitute a DL communication period. The base station apparatus 200 allocates each of the DL slots #0 to #3 to one or more terminal apparatuses 100. The base station apparatus 200 transmits a DL data optical signal in each DL slot. A light emitting element-specific reference signal (Ref.TxElement) and a data optical signal may be mapped in each DL slot in a time division manner.

The UL slots #0 to #3 constitute a UL communication period. The base station apparatus 200 allocates each of the UL slots #0 to #3 to one or more terminal apparatuses 100. The terminal apparatus 100 transmits a UL data optical signal in the allocated UL slot.

The base station apparatus 200 can perform simultaneous communication with the plurality of terminal apparatuses 100 located in mutually different directions. Specifically, the base station apparatus 200 can spatially multiplex the plurality of terminal apparatuses 100 located in mutually different directions. Therefore, the base station apparatus 200 may allocate one DL slot or one UL slot to a plurality of terminal apparatuses 100.

Note that the intensity modulation direct detection (IM/DD) scheme may be used for the optical communication between the terminal apparatus 100 and the base station apparatus 200. In the IM/DD scheme, data transmission is performed by utilizing the intensity of light emitted by a light emitting element on the transmitting side of the optical signal. The transmitting side transmits an optical signal whose intensity is modulated in accordance with the transmission data. The receiving side acquires the transmission data by directly detecting the intensity of the received optical signal using a light receiving element. One modulation scheme used in the IM/DD scheme is a subcarrier modulation scheme. Subcarrier modulation is a scheme of sending data by controlling the intensity of light emitted from a light emitting element to be a sinusoidal wave and modulating the amplitude and/or phase of this sinusoidal wave (also called a "subcarrier"). The optical communication system 1 may use an orthogonal frequency division multiplexing (OFDM) scheme, which is a type of subcarrier modulation scheme.

### (2) Configuration Example of Base Station Apparatus

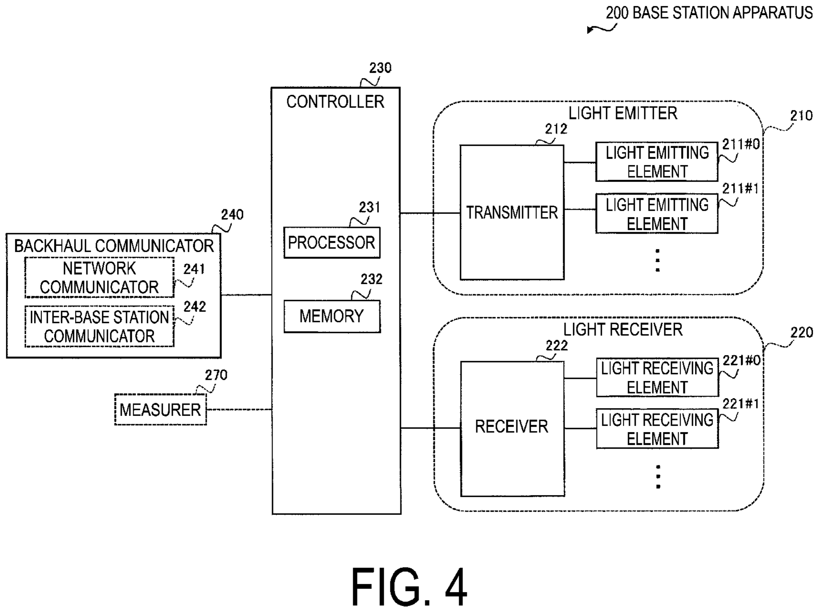

A configuration example of the base station apparatus 200 according to the embodiment will be described. FIG. 4 is a diagram illustrating a configuration example of the base station apparatus 200 according to the embodiment.

The base station apparatus 200 includes a light emitter 210, a light receiver 220, a controller 230, and a backhaul communicator 240. The light emitter 210 and the light receiver 220 constitute an optical communicator. The base station apparatus 200 may include a battery for supplying electrical power necessary for the base station apparatus 200 to operate.

The light emitter 210 transmits an optical signal to each terminal apparatus 100 under control of the controller 230. The light emitter 210 includes a plurality of light emitting elements 211 (211#0, 211#1, ...) and a transmitter 212. Each light emitting element 211 may be a laser diode (LD) or a light emitting diode (LED). In the following, an example in which each light emitting element 211 is an LED will be mainly described. Each light emitting element 211 converts an electrical signal (transmission signal) output by the transmitter 212 for optical communication into an optical signal, and transmits the optical signal. The transmitter 212 may be made of a Field-Programmable Gate Array (FPGA) and/or a System on a Chip (SoC). The transmitter 212 performs signal processing on a transmission signal output from the controller 230, converts the signal after the signal processing, and outputs the signal to each light emitting element 211. In the embodiment, the plurality of light emitting elements 211 have optical axes oriented in different directions. That is, the plurality of light emitting elements 211 have directivity (transmission directivity) in different directions.

The light receiver 220 receives an optical signal from the terminal apparatus 100. The light receiver 220 includes a plurality of light receiving elements 221 (221#0, 221#1, ...) and a receiver 222. Each light receiving element 221 may be a photodiode (PD). Each light receiving element 221 receives an optical signal, converts the received optical signal into an electrical signal (reception signal), and outputs the reception signal to the receiver 222. The receiver 222 may include an FPGA and/or an SoC. At least a part of the receiver 222 may be integrated with the transmitter 212. The receiver 222 converts the reception signal output by each light receiving element 221, performs signal processing on the converted reception signal, and outputs the processed reception signal to the controller 230.

For example, the light receiving element 221 is provided in a one-to-one correspondence with the light emitting element 211. Here, the light receiving element 221 has directivity (reception directivity) in the same direction as the corresponding light emitting element 211. That is, a plurality of pairs of the light emitting elements 211 and the light receiving elements 221 transmit optical signals in different directions and receive optical signals from different directions.

The controller 230 controls an overall operation of the base station apparatus 200. For example, the controller 230 controls the light emitter 210 and the light receiver 220. The operations of the base station apparatus 200 described above and below may be operations performed under the control of the controller 230. The controller 230 includes at least one processor 231 and at least one memory 232. The memory 232 stores a program to be executed by the processor 231 and information to be used for processing by the processor 231. The processor 231 executes programs stored in the memory to perform various types of processing.

The base station apparatus 200 may include a measurer 170 for acquiring communication environment parameters. The measurer 170 includes at least one selected from the group consisting of, for example, an anemometer, an accelerometer, an illuminometer, a time meter (clock), and a depth meter. In particular, when the base station apparatus 200 is installed on the water surface (see, for example, the base station apparatus 200 in FIG. 1), at least a part of the measurer 170 may be installed on a buoy (floating device). The light receiver 220 may be used as an illuminometer.

The backhaul communicator 240 performs backhaul communication via a backhaul line under control of the controller 230. The backhaul communicator 240 may have a network communicator 241 that communicates with the network 10 (for example, a core network) and an inter-base station communicator 242 that performs inter-base station communication with adjacent base stations.

The base station apparatus 200 configured in this manner forms a cell underwater. The optical communicator constituted by the light emitter 210 and the light receiver 220 performs optical communication, which is wireless communication using light, with the terminal apparatus 100 within the cell. The controller 230 controls the optical communicators (the light emitter 210 and the light receiver 220) to apply time diversity to optical communication in which optical signal transmission corresponding to identical transmission information is repeatedly performed at a predetermined time interval.

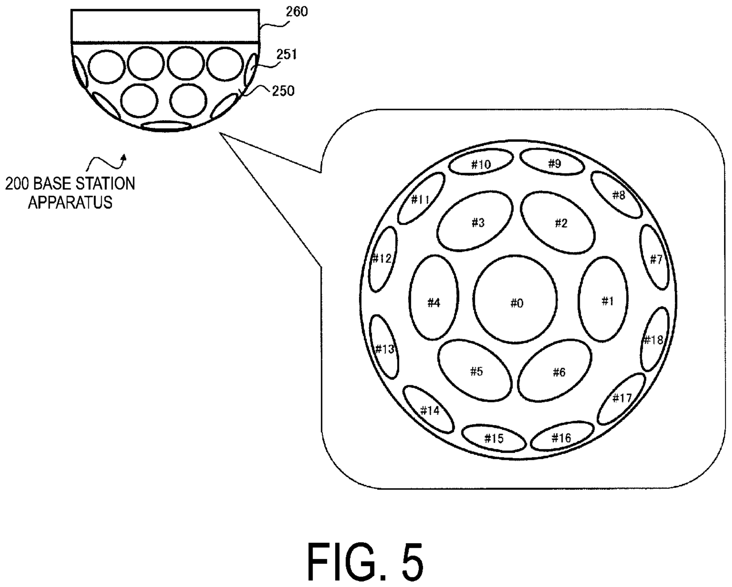

FIG. 5 is a diagram illustrating an outer appearance configuration example of the base station apparatus 200 according to the embodiment.

The base station apparatus 200 includes a hemispherical optical communicator 250 and a body portion 260 coupled to the optical communicator 250. However, the base station apparatus 200 may be formed into a spherical shape as a whole. The optical communicator 250 includes a plurality of light receiving/emitting regions 251 arranged in a distributed manner. Each light receiving/emitting region 251 is provided with at least one pair of a light emitting element 211 and a light receiving element 221. This configuration makes it easy for the base station apparatus 200 to perform optical communication with the terminal apparatuses 100 in various directions. In the illustrated example, the hemispherical optical communicator 250 includes a total of 19 light receiving/emitting regions 251 including light receiving/emitting regions 251#0 to 251#18. That is, the base station apparatus 200 includes a total of 19 light emitting elements including the light emitting elements 211#0 to 211#18, and a total of 19 light receiving elements including the light receiving elements 221#0 to 221#18.

### (3) Configuration Example of Terminal Apparatus

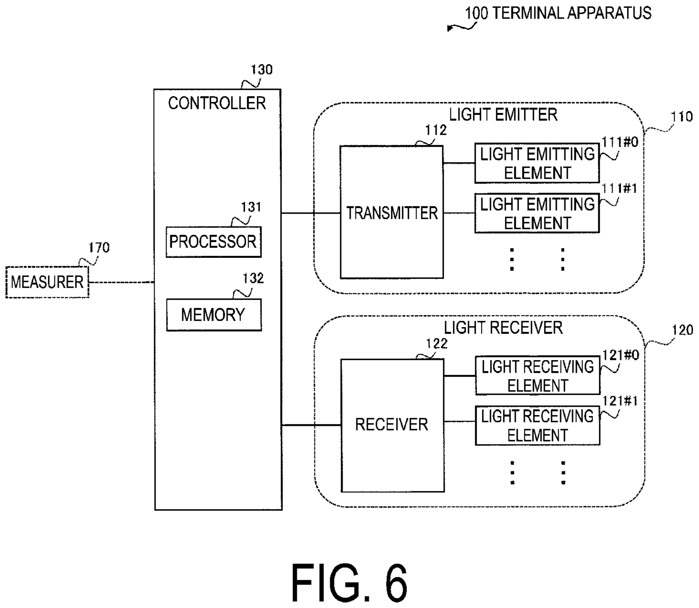

A configuration example of the terminal apparatus 100 according to the embodiment will be described. FIG. 6 is a diagram illustrating a configuration example of the terminal apparatus 100 according to the embodiment.

The terminal apparatus 100 includes a light emitter 110, a light receiver 120, and a controller 130. The light emitter 110 and the light receiver 120 constitutes an optical communicator. The terminal apparatus 100 may include a battery for supplying electrical power necessary for the terminal apparatus 100 to operate. The terminal apparatus 100 may include a moving mechanism (e.g., a motor and a screw) used for the terminal apparatus 100 to move.

The light emitter 110 transmits an optical signal to the base station apparatus 200 under control of the controller 130. The light emitter 110 includes a plurality of light emitting elements 111 (111#0, 111#1, ...) and a transmitter 112. Each light emitting element 111 may be a laser diode (LD) or a light emitting diode (LED). In the following, an example in which each light emitting element 211 is an LED will be mainly described. Each light emitting element 111 converts an electrical signal (transmission signal) output by the transmitter 112 for optical communication into an optical signal, and transmits the optical signal. The transmitter 112 may include an FPGA and/or an SoC. The transmitter 112 performs signal processing on a transmission signal output by the controller 130, converts the signal after the signal processing, and outputs the converted signal to each light emitting element 111. In the embodiment, the plurality of light emitting elements 111 have optical axes oriented in different directions. That is, the plurality of light emitting elements 111 have directivity (transmission directivity) in different directions.

The light receiver 120 receives an optical signal from the base station apparatus 200. The light receiver 120 includes a plurality of light receiving elements 121 (121#0, 121#1, ...) and a receiver 122. Each light receiving element 121 may be a photodiode (PD). Each light receiving element 121 receives an optical signal, converts the received optical signal into an electrical signal (reception signal), and outputs the reception signal to the receiver 122. The receiver 122 may include an FPGA and/or an SoC. At least a part of the receiver 122 may be integrated with the transmitter 112. The receiver 122 converts the reception signal output by each light receiving element 121, performs signal processing on the converted reception signal, and outputs the processed reception signal to the controller 130.

For example, the light receiving element 121 is provided in a one-to-one correspondence with the light emitting element 111. Here, the light receiving element 121 has directivity (reception directivity) in the same direction as the corresponding light emitting element 111. That is, a plurality of pairs of the light emitting elements 111 and the light receiving elements 121 transmit optical signals in different directions and receive optical signals from different directions.

The controller 130 controls an overall operation of the terminal apparatus 100. For example, the controller 130 controls the light emitter 110 and the light receiver 120. The operations of the terminal apparatus 100 described above and below may be operations performed under the control of the controller 130. The controller 130 includes at least one processor 131 and at least one memory 132. The memory 132 stores a program to be executed by the processor 131 and information to be used for processing by the processor 131. The processor 131 executes programs stored in the memory to perform various types of processing.

The terminal apparatus 100 may include a measurer 170 for acquiring communication environment parameters. The measurer 170 includes, for example, at least one of an illuminometer or a depth meter. The light receiver 120 may be used as an illuminometer.

The terminal apparatus 100 configured in this manner performs optical communication, which is wireless communication using light, underwater. The optical communicator constituted by the light emitter 110 and the light receiver 120 performs optical communication with the base station apparatus 200 in a cell formed by the base station apparatus 200 underwater. The controller 130 controls the optical communicators (the light emitter 110 and the light receiver 120) to apply time diversity to optical communication in which optical signal transmission corresponding to identical transmission information is repeatedly performed at a predetermined time interval.

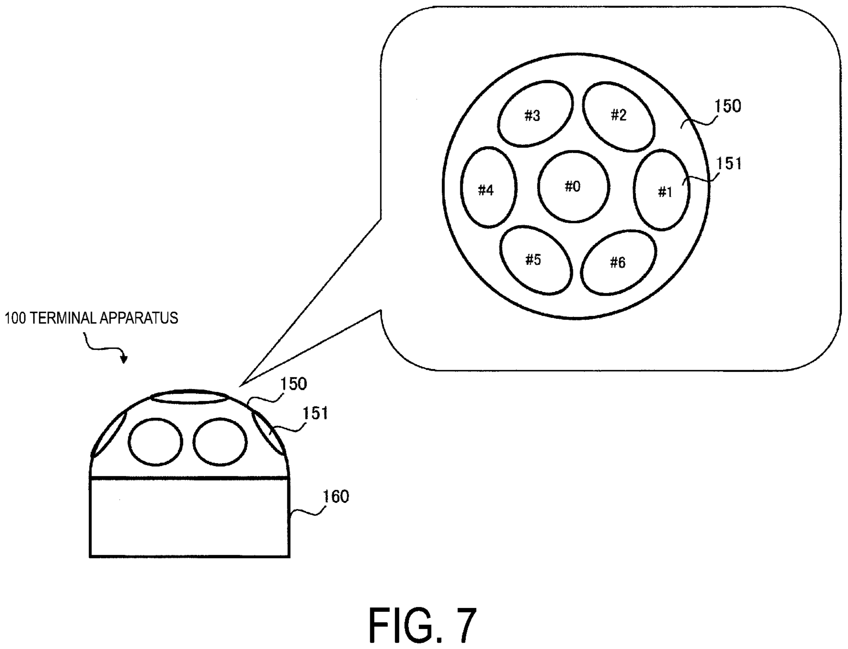

FIG. 7 is a diagram illustrating an outer appearance configuration example of the terminal apparatus 100 according to the embodiment.

The terminal apparatus 100 includes a hemispherical optical communicator 150 and a body portion 160 coupled to the optical communicator 150. However, the terminal apparatus 100 may be formed into a spherical shape as a whole. The optical communicator 150 includes a plurality of light receiving/emitting regions 151 arranged in a distributed manner. Each light receiving/emitting region 151 is provided with at least one pair of a light emitting element 111 and a light receiving element 121. This configuration makes it easy for the terminal apparatus 100 to perform optical communication with the base station apparatus 200 in various directions. In the illustrated example, the hemispherical optical communicator 150 includes a total of seven light receiving/emitting regions 151 including light receiving/emitting regions 151#0 to 151#6. That is, the terminal apparatus 100 includes a total of seven light emitting elements including the light emitting elements 111#0 to 111 #6, and a total of seven light receiving elements including the light receiving elements 121#0 to 121#6.

### (4) Example of Downlink Transmission

An example of downlink transmission according to the embodiment will be described. The base station apparatus 200 includes a plurality of light emitting elements 211 having different directivities. In downlink transmission, the base station apparatus 200 may use a plurality of light emitting elements 211 to perform spatial multiplexing transmission for transmitting data to different terminal apparatuses 100, or composite transmission for transmitting the same data to the same terminal apparatus 100.

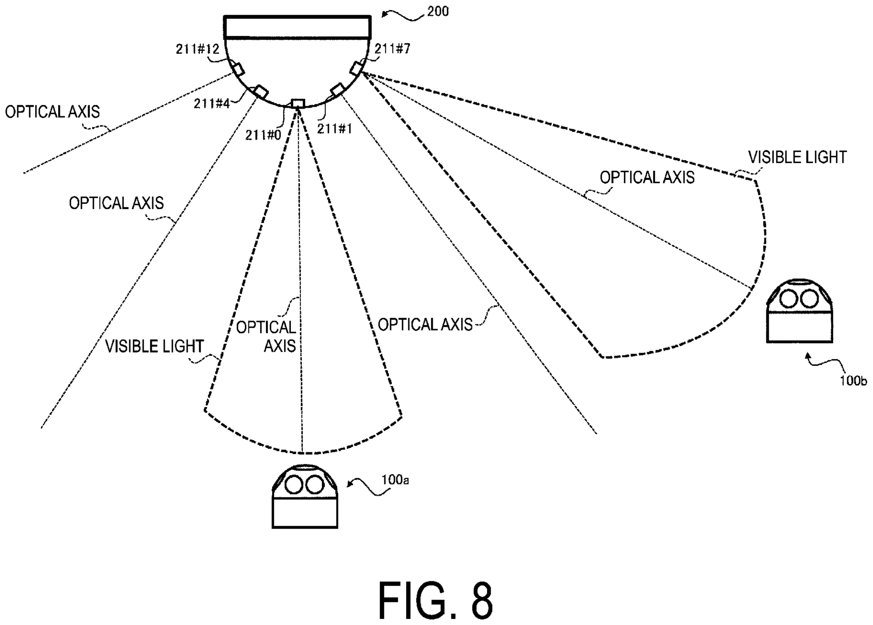

FIG. 8 is a diagram for describing spatial multiplexing transmission according to the embodiment. FIG. 8 illustrates a simplified cross section of the base station apparatus 200. In the base station apparatus 200, the plurality of light emitting elements 211 are arranged such that the angle formed between the optical axis of one light emitting element 211 and the optical axis of another light emitting element 211 increases as the distance between the one light emitting element 211 and the other light emitting element 211 increases. The angle formed between the optical axis of the light emitting element 211#0 and the optical axis of the light emitting element 211#7 not adjacent to the light emitting element 211#0 is larger than the angle formed between the optical axis of the light emitting element 211#0 and the optical axis of the light emitting element 211#1 adjacent to the light emitting element 211#0.

In the illustrated example, while the base station apparatus 200 transmits an optical signal to the terminal apparatus 100a using the light emitting element 211#0, the base station apparatus 200 transmits an optical signal to the terminal apparatus 100b using the light emitting element 211#7 whose optical axis is oriented in a different direction from that of the light emitting element 211#0. This causes transmission to the terminal apparatus 100a and transmission to the terminal apparatus 100b to be performed in a spatial division manner, and simultaneous transmission can be performed while suppressing the effects of interference between them. This makes it possible to increase the number of terminal apparatuses 100 accommodated by the base station apparatus 200, thereby improving the system capacity of the optical communication system 1.

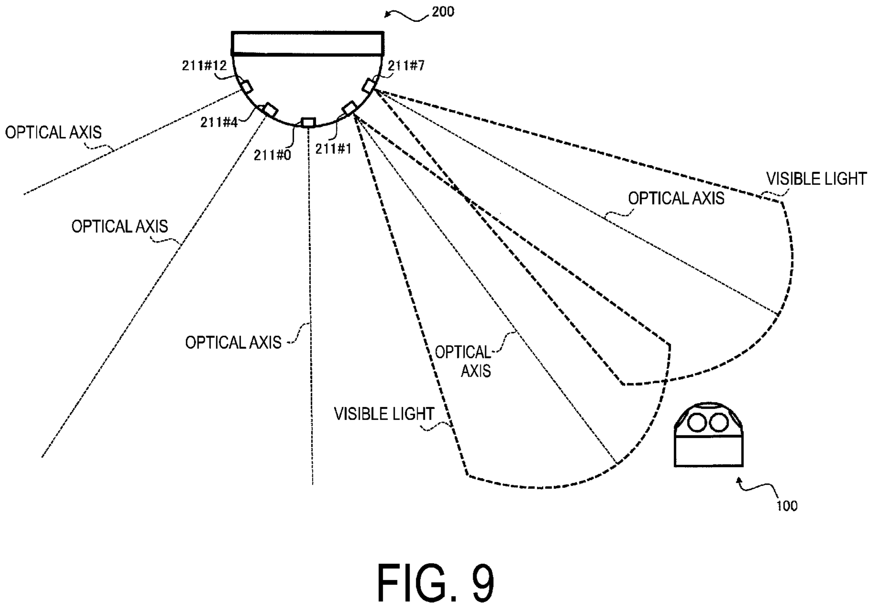

FIG. 9 is a diagram for describing composite transmission according to the embodiment. FIG. 9 illustrates a simplified cross section of the base station apparatus 200.

In the illustrated example, the base station apparatus 200 transmits an optical signal to the terminal apparatus 100 using the light emitting element 211#1 and transmits the same optical signal to the same terminal apparatus 100 using the light emitting element 211#7 whose optical axis is oriented in a different direction from that of the light emitting element 211#1. The optical signal transmitted by the light emitting element 211#1 and the optical signal transmitted by the light emitting element 211#7 are the same optical signal, and therefore are partially combined and constructively coupled together underwater. As a result, the communicable distance can be increased.

### (5) Caustics and Time Diversity

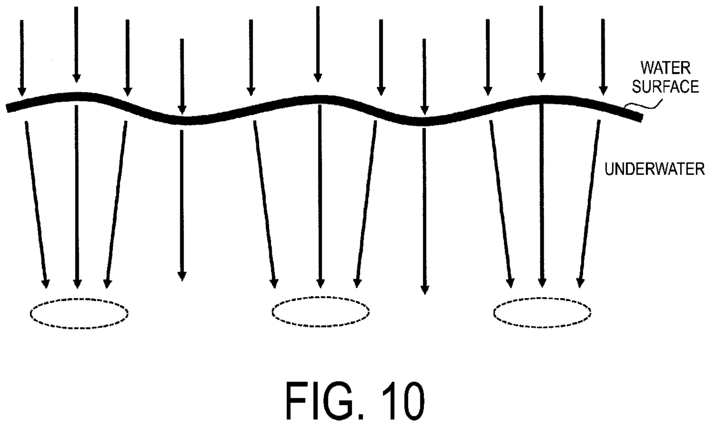

Next, caustics and time diversity according to an embodiment will be described. FIGs. 10 to 12 are diagrams for describing caustics.

In FIG. 10, the rays of sunlight are indicated by arrows, and the portion where the rays of sunlight are concentrated (light-concentrating region) is indicated by a dashed circle. In the optical communication system 1, sunlight is a very influential obstruction factor. In particular, in the optical communication system 1 that performs optical communication underwater, a lattice pattern of sunlight-derived light called caustics is generated underwater due to the influence of the gradient distribution of the water surface. In other words, caustics is a light-concentrating phenomenon caused by refraction of sunlight on the water surface. In a portion corresponding to a lattice point in the lattice pattern, sunlight with a higher intensity becomes concentrated compared with in the surrounding areas, causing instantaneous large noise (solar noise) in optical communications.

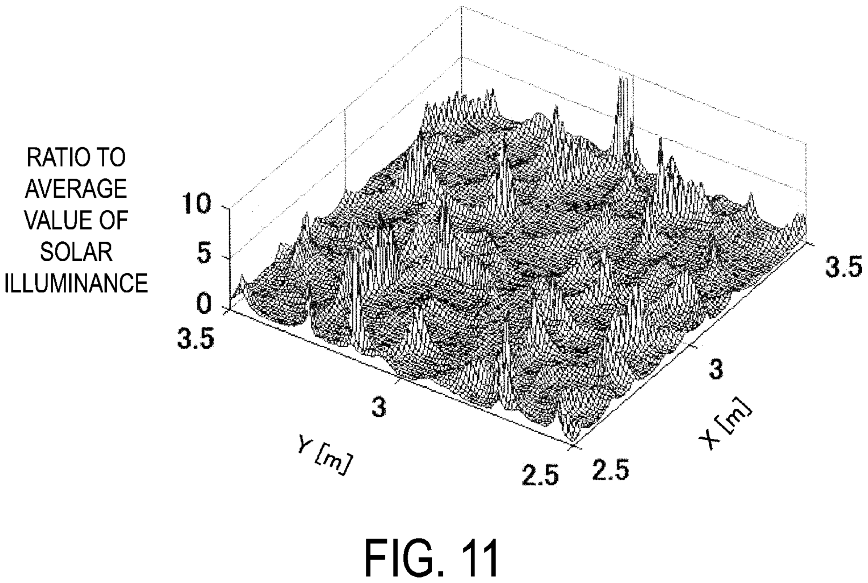

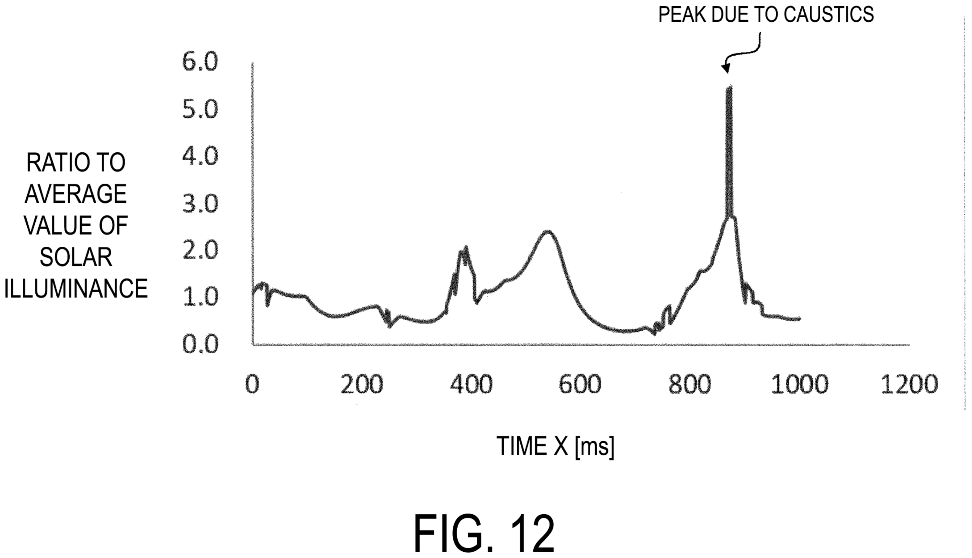

FIG. 11 is a diagram illustrating a spatial distribution of light intensity (illuminance) in water. FIG. 12 is a diagram illustrating a temporal distribution of light intensity (illuminance) at one point underwater. For example, in shallow water, caustics caused by swaying due to refraction on the wave front produce instantaneous large noise. In particular, in regions with relatively shallow water depth and/or gentle waves (low wind speed), sunlight that is about 5 to 10 times the average is incident as a spot in time/space, resulting in large noise.

In the embodiment, at least one of the base station apparatus 200 or the terminal apparatus 100 performs optical communication to which time diversity is applied in which optical signal transmission corresponding to identical transmission information is repeatedly performed at a predetermined time interval (also referred to as a "time interval T"). For example, at least one of the base station apparatus 200 or the terminal apparatus 100 avoids the solar noise peak in time by using time diversity, where the time interval T is longer than the duration of the solar noise peak due to caustics illustrated in FIG. 12, for example, a time interval T of 10 ms or more. This makes it possible to reduce the influence of solar noise caused by caustics in the optical communication system 1 that performs optical communication underwater, enabling optical communication to be performed appropriately.

Time diversity may be repetition, in which the same optical signal (for example, the same data optical signal and/or the same control optical signal) is repeatedly transmitted at a time interval T. The transmitting side may repeatedly transmit the same optical signal at the time interval T a predetermined number of times. The transmitting side may repeatedly transmit the same optical signal at the time interval T until receiving a delivery confirmation (Ack: Acknowledgement) from the receiving side. The receiving side may hold the decoded result that was not successfully received (specifically, decoded), and perform a combining process of combining the held decoded result with the next received optical signal.

Alternatively, time diversity may be hybrid automatic repeat request (HARQ), which repeatedly transmits a data optical signal including the same data (and different redundant bits) at the time interval T. The transmitting side may repeatedly transmit a data optical signal including the same data (and different redundant bits) at the time interval T until the transmitting side receives an Ack from the receiving side. The receiving side may hold the decoded result that was not successfully received (specifically, decoded), and perform a combining process of combining the held decoded result with the next received optical signal.

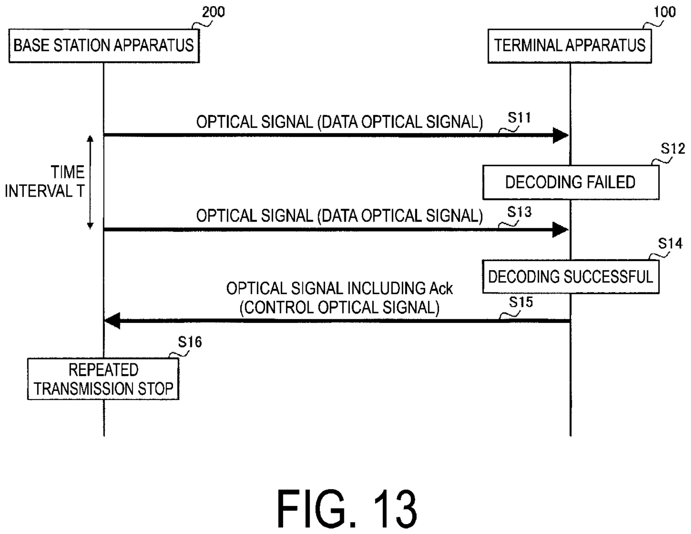

FIG. 13 is a diagram illustrating an example of a communication sequence when time diversity is applied to downlink (DL) optical communication. Although time diversity may be applied to the transmission of a control optical signal, an example in which time diversity is applied to the transmission of a data optical signal will be described here.

In step S11, the base station apparatus 200 transmits a data optical signal to the terminal apparatus 100. The terminal apparatus 100 receives the data optical signal from the base station apparatus 200. Here, it is assumed that the terminal apparatus 100 fails to decode the data optical signal from the base station apparatus 200 due to solar noise caused by caustics (step S12).

In step S13, when the time interval T has elapsed since step S11, the base station apparatus 200 transmits, to the terminal apparatus 100, a data optical signal that is the same as the data optical signal transmitted in step S11. The terminal apparatus 100 receives the data optical signal from the base station apparatus 200. At this point, the influence of solar noise caused by caustics is small, and the terminal apparatus 100 succeeds in decoding the data optical signal from the base station apparatus 200 (step S14).

In step S15, the terminal apparatus 100 transmits, to the base station apparatus 200, a control optical signal including an Ack indicating that the data optical signal was successfully decoded in step S14. When the base station apparatus 200 receives the control optical signal (Ack) from the terminal apparatus 100, the base station apparatus 200 stops the repeated transmission of the same data optical signal (step S16).

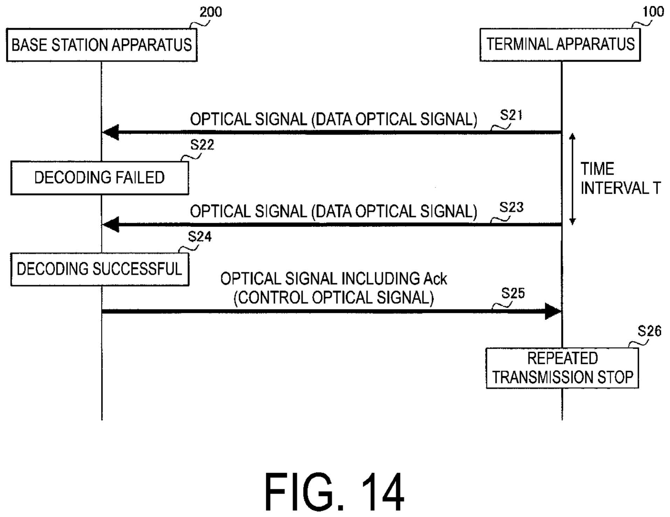

FIG. 14 is a diagram illustrating an example of a communication sequence when time diversity is applied to uplink (UL) optical communications. Although time diversity may be applied to the transmission of a control optical signal, an example in which time diversity is applied to the transmission of a data optical signal will be described here.

In step S21, the terminal apparatus 100 transmits a data optical signal to the base station apparatus 200. The base station apparatus 200 receives the data optical signal from the terminal apparatus 100. Here, it is assumed that the base station apparatus 200 fails to decode the data optical signal from the terminal apparatus 100 due to solar noise caused by caustics (step S22).

In step S23, when the time interval T has elapsed since step S21, the terminal apparatus 100 transmits, to the base station apparatus 200, a data optical signal that is the same as the data optical signal transmitted in step S21. The base station apparatus 200 receives the data optical signal from the terminal apparatus 100. At this point, the influence of solar noise caused by caustics is small, and the base station apparatus 200 succeeds in decoding the data optical signal from the terminal apparatus 100 (step S24).

In step S25, the base station apparatus 200 transmits, to the terminal apparatus 100, a control optical signal including an Ack indicating that the data optical signal was successfully decoded in step S24. When the terminal apparatus 100 receives the control optical signal (Ack) from the base station apparatus 200, the terminal apparatus 100 stops the repeated transmission of the same data optical signal (step S26).

In the following embodiment, an example is described in which time diversity is applicable to both UL and DL. However, time diversity may be applicable only to the UL. Time diversity may be applicable only to the DL. The time interval T (predetermined time interval) of time diversity may be a common time interval for the UL and DL. The time interval T may be different time intervals for the UL and DL.

### (6) Time Diversity Control

On the premise of the above-mentioned time diversity, time diversity control according to an embodiment will be described.

At least one of the base station apparatus 200 or the terminal apparatus 100 (also simply referred to as an "optical communication apparatus") acquires communication environment parameters that are parameters related to caustics and that affect the communication quality of optical communication, and controls time diversity based on the communication environment parameters. Specifically, the optical communication apparatus estimates the occurrence frequency and/or intensity of instantaneous noise peaks due to caustics based on communication environment parameters, and performs appropriate time diversity. This makes it possible to suppress degradation of communication quality due to noise peaks. Here, if transmission is repeatedly performed at wide time intervals using time diversity, this is disadvantageous in terms of real-time communication and/or effective use of communication resources. Therefore, when it is estimated that the influence of caustics is not significant, the optical communication apparatus may not apply time diversity or may shorten the time interval T of time diversity.

Here, the communication environment parameter may be at least one selected from the group consisting of, for example, a wind speed parameter indicating the wind speed on the water, a wave state parameter indicating the state of the waves (that is, the degree of swaying of the water surface), an illuminance parameter indicating the intensity of sunlight incident on the water surface, an angle of incidence parameter indicating an angle of incidence of sunlight with respect to the water surface, a water depth parameter indicating a water depth of the optical communication apparatus, and an orientation parameter indicating an orientation of the light receiving element and/or light emitting element of the optical communication apparatus used for optical communication. However, the communication environment parameters are not limited to these parameters as long as they are parameters related to caustics and affect the communication quality of optical communication. The optical communication apparatus may perform time diversity control using only one of these plurality of parameters. The optical communication apparatus may perform time diversity control using a combination of two or more parameters.

For example, the optical communication apparatus determines whether to apply time diversity to optical communication based on communication environment parameters. This makes it possible not to apply time diversity when it is estimated that the influence of caustics is not significant, thereby ensuring real-time communication and making effective use of communication resources. On the other hand, the optical communication apparatus becomes possible to apply time diversity when it is estimated that the influence of caustics is significant, thereby reducing the influence of solar noise caused by caustics and enabling appropriate optical communication.

The optical communication apparatus may determine a time interval T (a predetermined time interval) of time diversity based on the communication environment parameters, instead of or in addition to determining whether to apply time diversity to optical communication based on the communication environment parameters. For example, the optical communication apparatus may determine the time interval T of time diversity based on communication environment parameters, under the premise that time diversity is always applied to optical communication. Alternatively, the optical communication apparatus may determine to apply time diversity to optical communication based on the communication environment parameters, and then further determine the time interval T of the time diversity based on the communication environment parameters. This makes it possible, for example, to shorten the time interval T when it is estimated that the influence of caustics is not significant, thereby ensuring real-time communication and making effective use of communication resources. On the other hand, the optical communication apparatus becomes possible, for example, not to shorten the time interval T (the time interval T may be widened) when it is estimated that the influence of caustics is significant, thereby reducing the influence of solar noise caused by caustics and enabling appropriate optical communication.

Note that the optical communication apparatus acquires communication environment parameters based on at least one selected from the group consisting of the output of a measurer provided on the water surface or above the water, information provided from an information providing apparatus via the network 10, the output of a measurer 270 provided in the base station apparatus 200, and the output of the measurer 170 provided in the terminal apparatus 100. Here, the measurer provided on the water surface or above the water may be a measurer provided on a buoy (floating device). The measurer may use a solar power generation apparatus (solar panel) provided on the water surface or above the water as an illuminometer. The information providing apparatus may be a server connected to a wide area network (WAN) serving as the network 10. The information providing apparatus may be a local computer connected to a local area network (LAN) serving as the network 10.

(6.1) Example of Time Diversity Control Based on Wind Speed and/or State of Waves When the wind speed on the water is strong and/or the degree of swaying (fluctuation) of the water surface is high, caustics are less likely to occur (that is, solar noise peaks are less likely to occur). Therefore, the optical communication apparatus determines at least one of not applying time diversity to optical communication or making the time interval T shorter than a reference time interval based on at least one of the value of a wind speed parameter indicating wind speed being equal to or greater than a threshold value or the value of a wave state parameter indicating the state of the waves being equal to or greater than a threshold value. The reference time interval may be a predetermined time interval (for example, a time interval of 10 ms or more). The reference time interval may be the time interval used in the previous transmission.

On the other hand, when the wind speed on the water is weak and/or the degree of swaying (fluctuation) of the water surface is small, caustics are likely to occur (that is, solar noise peaks are likely to occur). Therefore, the optical communication apparatus may determine at least one of applying time diversity to optical communication or setting the time interval T to a reference time interval (which may mean making the time interval T wider than the reference time interval) based on at least one of the value of a wind speed parameter indicating wind speed being less than a threshold value or the value of a wave state parameter indicating the state of the waves being less than a threshold value.

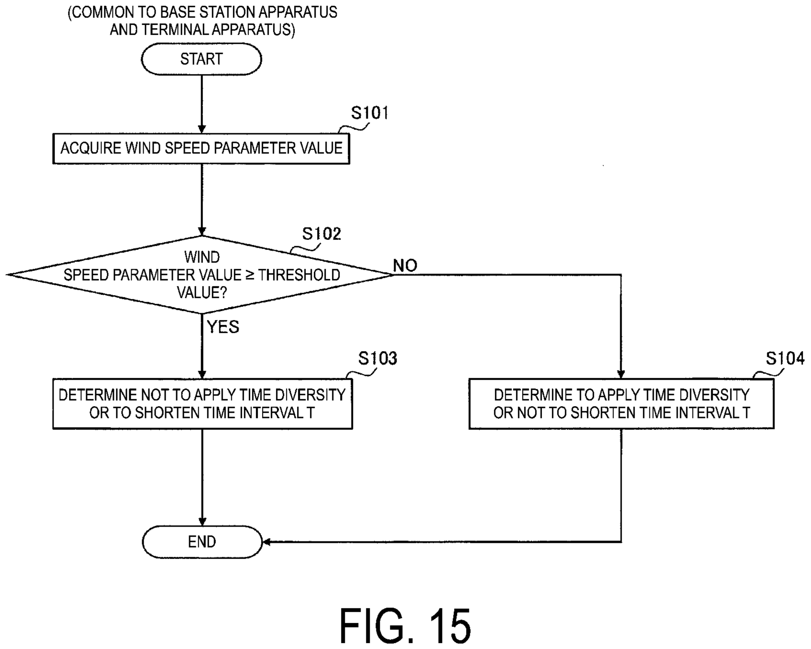

FIG. 15 is a diagram illustrating an example of time diversity control based on a wind speed parameter value. Here, an example will be described in which the base station apparatus 200 takes the initiative in performing time diversity control. However, the terminal apparatus 100 may take the initiative in performing time diversity control based on the wind speed parameter value. In this case, the base station apparatus 200 may notify the terminal apparatus 100 of the wind speed parameter value, and the terminal apparatus 100 may perform time diversity control based on the wind speed parameter value acquired from the base station apparatus 200.

In step S101, the base station apparatus 200 acquires a wind speed parameter value. For example, the base station apparatus 200 acquires the wind speed parameter value using at least one selected from the group consisting of an anemometer provided on a buoy, an anemometer provided in the base station apparatus 200, and weather information provided via the network 10.

In step S102, the base station apparatus 200 determines whether the wind speed parameter value acquired in step S101 is equal to or greater than a threshold value.

When the wind speed parameter value is equal to or greater than the threshold value (step S102: YES), in step S103, the base station apparatus 200 determines not to apply time diversity to the optical communication or to make the time interval T shorter than the reference time interval.

On the other hand, when the wind speed parameter value is less than the threshold value (step S102: NO), in step S104, the base station apparatus 200 determines to apply time diversity to the optical communication or to set the time interval T to the reference time interval (which may mean making the time interval T wider than the reference time interval).

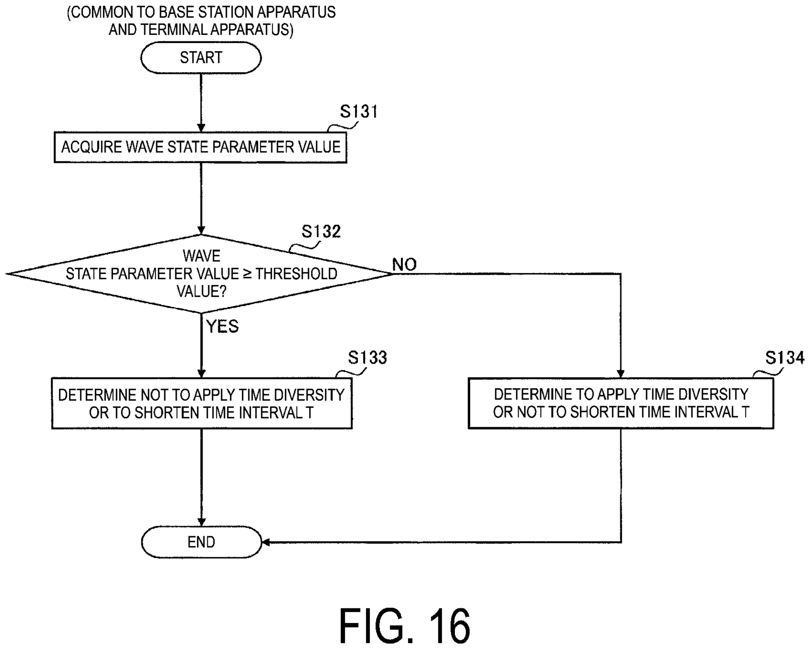

FIG. 16 is a diagram illustrating an example of time diversity control based on a wave state parameter value. Here, an example will be described in which the base station apparatus 200 takes the initiative in performing time diversity control. However, the terminal apparatus 100 may take the initiative in performing time diversity control based on the wave state parameter value. In this case, the base station apparatus 200 may notify the terminal apparatus 100 of the wave state parameter value, and the terminal apparatus 100 may perform time diversity control based on the wave state parameter value acquired from the base station apparatus 200.

In step S131, the base station apparatus 200 acquires a wave state parameter value. For example, the base station apparatus 200 acquires the wave state parameter value using at least one selected from the group consisting of an accelerometer provided on a buoy, an accelerometer provided in the base station apparatus 200, and weather information (wave information) provided via the network 10.

In step S132, the base station apparatus 200 determines whether the wave state parameter value acquired in step S131 is equal to or greater than a threshold value.

When the wave state parameter value is equal to or greater than the threshold value (step S132: YES), in step S133, the base station apparatus 200 determines not to apply time diversity to the optical communication or to make the time interval T shorter than the reference time interval.

On the other hand, when the wave state parameter value is less than the threshold value (step S132: NO), in step S134, the base station apparatus 200 determines to apply time diversity to the optical communication or to set the time interval T to the reference time interval (which may mean making the time interval T wider than the reference time interval).

### (6.2) Example of Time Diversity Control Based on Weather and/or Time Period

When the weather is not sunny and the amount of solar radiation is low, and/or when the solar radiation angle is shallow (close to horizontal) at sunrise and sunset, caustics are less likely to occur (that is, solar noise peaks are less likely to occur). Therefore, the optical communication apparatus determines at least one of not applying time diversity to optical communication or making the time interval T shorter than a reference time interval based on at least one of a value of a parameter indicating an intensity of sunlight incident on the water surface (illuminance parameter value) being less than a threshold value or a value of a parameter indicating an angle of incidence of sunlight with respect to the water surface (angle of incidence parameter value) being less than a threshold value. Note that the optical communication apparatus may determine not to apply time diversity to optical communications after sunset (including nighttime) because no sunlight is incident on the water surface.

On the other hand, when the weather is sunny and the amount of solar radiation is high, and/or when it is other than sunrise or sunset (daytime) and the solar radiation angle is deep (close to vertical), caustics are likely to occur (that is, solar noise peaks are likely to occur). Therefore, the optical communication apparatus may determine at least one of applying time diversity to optical communication or setting the time interval T to a reference time interval (which may mean making the time interval T wider than the reference time interval) based on at least one of illuminance parameter value being equal to or greater than a threshold value or the angle of incidence parameter value being equal to or greater than a threshold value.

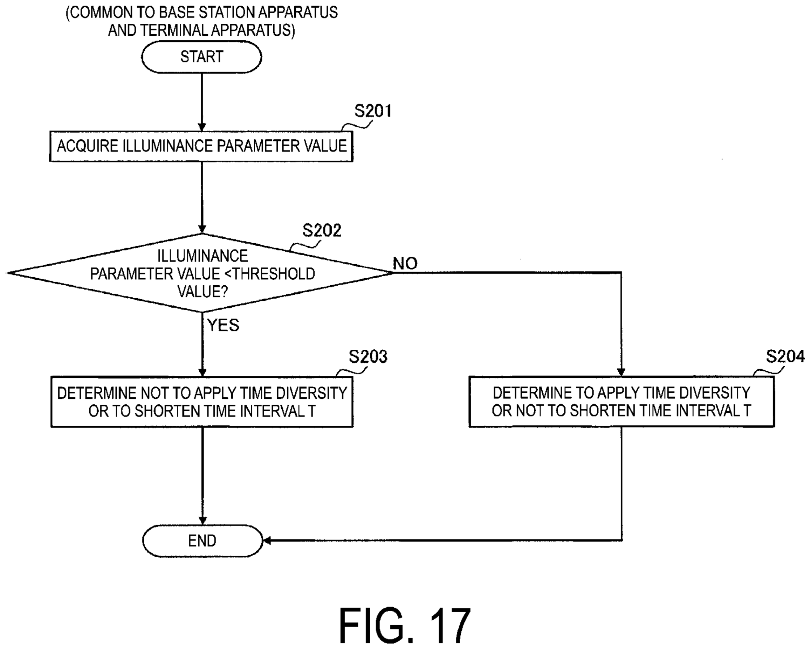

FIG. 17 is a diagram illustrating an example of time diversity control based on an illuminance parameter value. Here, an example will be described in which the base station apparatus 200 takes the initiative in performing time diversity control. However, the terminal apparatus 100 may take the initiative in performing time diversity control based on the illuminance parameter value. In this case, the base station apparatus 200 may notify the terminal apparatus 100 of the illuminance parameter value, and the terminal apparatus 100 may perform time diversity control based on the illuminance parameter value acquired from the base station apparatus 200.

In step S201, the base station apparatus 200 acquires an illuminance parameter value. For example, the base station apparatus 200 acquires the illuminance parameter value using at least one selected from the group consisting of an illuminometer provided on a buoy or the base station apparatus 200, a solar panel provided on the water surface or above the water, and weather information provided via the network 10.

In step S202, the base station apparatus 200 determines whether the illuminance parameter value acquired in step S201 is less than a threshold value.

When the illuminance parameter value is less than the threshold value (step S202: YES), in step S203, the base station apparatus 200 determines not to apply time diversity to the optical communication or to make the time interval T shorter than the reference time interval.

On the other hand, when the illuminance parameter value is equal to or greater than the threshold value (step S202: NO), in step S204, the base station apparatus 200 determines to apply time diversity to the optical communication or to set the time interval T to the reference time interval (which may mean making the time interval T wider than the reference time interval).

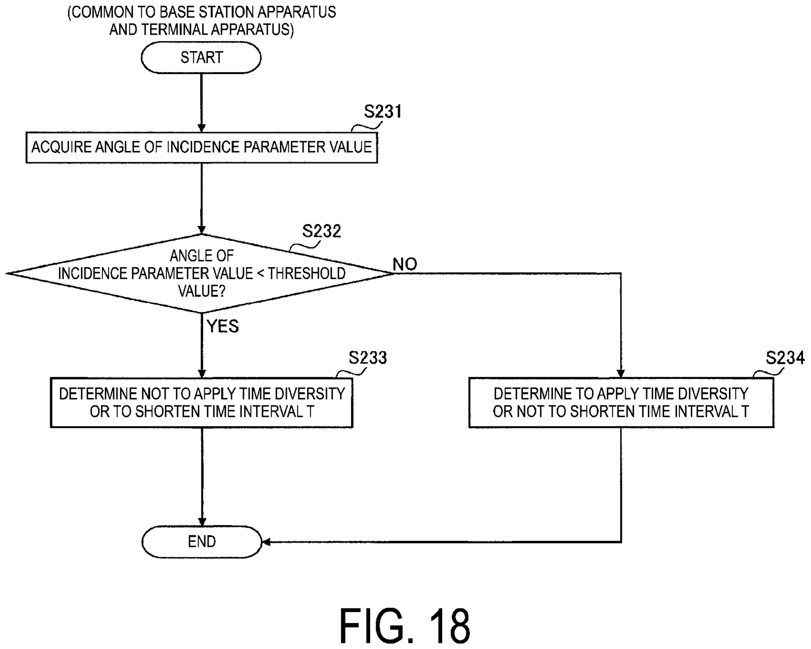

FIG. 18 is a diagram illustrating an example of time diversity control based on an angle of incidence parameter value. Here, an example will be described in which the base station apparatus 200 takes the initiative in performing time diversity control. However, the terminal apparatus 100 may take the initiative in performing time diversity control based on the angle of incidence parameter value. In this case, the base station apparatus 200 may notify the terminal apparatus 100 of the angle of incidence parameter value, and the terminal apparatus 100 may perform time diversity control based on the angle of incidence parameter value acquired from the base station apparatus 200.

In step S231, the base station apparatus 200 acquires an angle of incidence parameter value. For example, the base station apparatus 200 acquires the current time using at least one of a clock provided in the base station apparatus 200 or time information provided via the network 10, and acquires the angle of incidence parameter value corresponding to the current time.

In step S232, the base station apparatus 200 determines whether the angle of incidence parameter value acquired in step S231 is less than a threshold value.

When the angle of incidence parameter value is less than the threshold value (step S232: YES), in step S233, the base station apparatus 200 determines not to apply time diversity to the optical communication or to make the time interval T shorter than the reference time interval.

On the other hand, when the angle of incidence parameter value is equal to or greater than the threshold value (step S232: NO), in step S234, the base station apparatus 200 determines to apply time diversity to the optical communication or to set the time interval T to the reference time interval (which may mean making the time interval T wider than the reference time interval).

### (6.3) Example of Time Diversity Control Based on Water Depth

When the optical communication apparatus is located at a deep depth (that is, far from the water surface), the optical communication apparatus is less susceptible to the influence of caustics and solar noise peaks are less likely to occur. Therefore, based on the value of a parameter indicating the water depth of the optical communication apparatus (water depth parameter value) being equal to or greater than a threshold value, the optical communication apparatus determines at least one of not applying time diversity to optical communication or making the time interval T shorter than a reference time interval.

On the other hand, when the optical communication apparatus is located at a shallow depth (that is, close to the water surface), the optical communication apparatus is susceptible to the influence of caustics and solar noise peaks are likely to occur. Therefore, the optical communication apparatus may determine at least one of applying time diversity to optical communication or setting the time interval T to a reference time interval (which may mean making the time interval T wider than the reference time interval) based on the water depth parameter value being less than a threshold value.

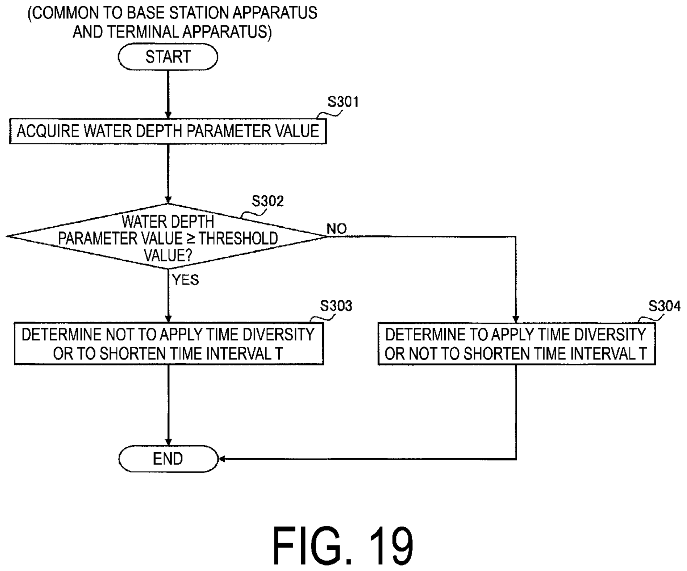

FIG. 19 is a diagram illustrating an example of time diversity control based on a water depth parameter value. Here, an example will be described in which the base station apparatus 200 takes the initiative in performing time diversity control. However, the terminal apparatus 100 may take the initiative in performing time diversity control based on the water depth parameter value. In this case, the base station apparatus 200 may notify the terminal apparatus 100 of the water depth parameter value, and the terminal apparatus 100 may perform time diversity control based on the water depth parameter value acquired from the base station apparatus 200. Alternatively, the terminal apparatus 100 may perform time diversity control based on a water depth parameter value acquired using a water depth gauge provided in the terminal apparatus 100.

In step S301, the base station apparatus 200 acquires a water depth parameter value. For example, the base station apparatus 200 acquires the water depth parameter value using at least one of a water depth gauge provided in the base station apparatus 200 or depth information pre-stored in the memory 232 of the base station apparatus 200. Alternatively, the base station apparatus 200 may acquire the water depth parameter value from the terminal apparatus 100.

In step S302, the base station apparatus 200 determines whether the water depth parameter value acquired in step S301 is equal to or greater than a threshold value.

When the water depth parameter value is equal to or greater than the threshold value (step S302: YES), in step S303, the base station apparatus 200 determines not to apply time diversity to the optical communication or to make the time interval T shorter than the reference time interval.

On the other hand, when the water depth parameter value is less than the threshold value (step S302: NO), in step S304, the base station apparatus 200 determines to apply time diversity to the optical communication or to set the time interval T to the reference time interval (which may mean making the time interval T wider than the reference time interval).

### (6.4) Example of Time Diversity Control Based on Orientation of Light Receiving/Emitting Element

Here, the description will be given assuming a configuration of the optical communication system 1 as illustrated in FIG. 2, that is, a configuration in which each optical communication apparatus is capable of optical communication in all directions. When the orientation of the light receiving element used by the optical communication apparatus for optical communication is not upward (for example, when the light receiving element faces downward or horizontally), the optical communication apparatus is less susceptible to the influence of caustics and solar noise peaks are less likely to occur. Therefore, the optical communication apparatus acquires the orientation (orientation parameter) of the light receiving element used by the optical communication apparatus for optical communication, and based on the orientation not being upward, the optical communication apparatus determines at least one of not applying time diversity to the optical communication or making the time interval T shorter than the reference time interval.

On the other hand, when the orientation of the light receiving element used for the optical communication apparatus for optical communication is upward, the optical communication apparatus is susceptible to the influence of caustics and solar noise peaks are likely to occur. Therefore, the optical communication apparatus may determine at least one of applying time diversity to optical communication or setting the time interval T to a reference time interval (which may mean making the time interval T wider than the reference time interval) based on the orientation of the light receiving element used by the optical communication apparatus for optical communication being upward.

The optical communication apparatus may individually perform time diversity control for each of the UL and DL. This allows the time diversity control to be optimized for each of the UL and DL.

For example, the base station apparatus 200 may determine to apply time diversity to UL optical communication based on the orientation of the light receiving element 221 of the base station apparatus 200 used for optical communication being upward. The base station apparatus 200 may determine to apply time diversity to DL optical communication based on the orientation of the light emitting element 211 of the base station apparatus 200 used for optical communication being downward (in this case, the orientation of the light receiving element 121 of the terminal apparatus 100 used for optical communication being upward).

The terminal apparatus 100 may determine to apply time diversity to DL optical communication based on the orientation of the light receiving element 121 of the terminal apparatus 100 used for optical communication being upward. The terminal apparatus 100 may determine to apply time diversity to UL optical communication based on the orientation of the light emitting element 111 of the terminal apparatus 100 used for optical communication being downward (in this case, the orientation of the light receiving element 221 of the base station apparatus 200 used for optical communication being upward).

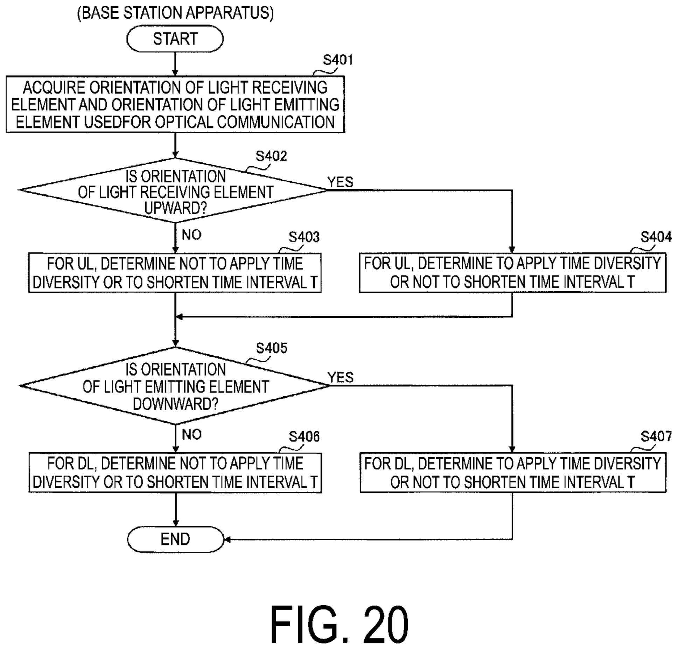

FIG. 20 is a diagram illustrating an example of time diversity control based on the orientation of a light receiving/emitting element of the base station apparatus 200.

In step S401, the base station apparatus 200 acquires the orientation of the light receiving element 221 and/or the light emitting element 211 of the base station apparatus 200 used for optical communication. For example, the base station apparatus 200 specifies the light receiving element 221 having the highest receiving strength of the optical signal from the terminal apparatus 100 and the light emitting element 211 that is paired with the light receiving element 221, and acquires the orientation of the specified light receiving element 221 and the orientation of the specified light emitting element 211.

In step S402, the base station apparatus 200 determines whether the orientation of the light receiving element 221 specified in step S401 is upward.

When the orientation of the light receiving element 221 specified in step S401 is not upward (step S402: NO), in step S403, the base station apparatus 200 determines not to apply time diversity to optical communication for UL or to make the time interval T shorter than the reference time interval.

On the other hand, when the orientation of the light receiving element 221 specified in step S401 is upward (step S402: YES), in step S404, the base station apparatus 200 determines to apply time diversity to the optical communication for UL or to set the time interval T to the reference time interval (which may mean making the time interval T wider than the reference time interval).

In step S405, the base station apparatus 200 determines whether the orientation of the light emitting element 211 specified in step S401 is downward.

When the orientation of the light emitting element 211 specified in step S401 is not downward (step S405: NO), in step S406, the base station apparatus 200 determines not to apply time diversity to optical communication for DL or to make the time interval T shorter than the reference time interval.

On the other hand, when the orientation of the light emitting element 211 specified in step S401 is downward (step S405: YES), in step S407, the base station apparatus 200 determines to apply time diversity to the optical communication for DL or to set the time interval T to the reference time interval (which may mean making the time interval T wider than the reference time interval).

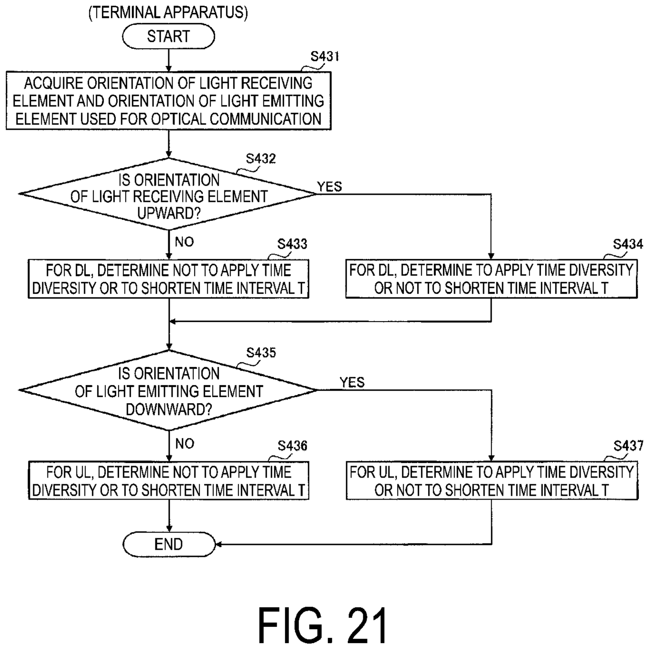

FIG. 21 is a diagram illustrating an example of time diversity control based on the orientation of a light receiving/emitting element of the terminal apparatus 100.

In step S431, the terminal apparatus 100 acquires the orientation of the light receiving element 121 and/or the light emitting element 111 of the terminal apparatus 100 used for optical communication. For example, the terminal apparatus 100 specifies the light receiving element 121 having the highest receiving strength of the optical signal from the base station apparatus 200 and the light emitting element 111 that is paired with the light receiving element 121, and acquires the orientation of the specified light receiving element 121 and the orientation of the specified light emitting element 111.

In step S432, the terminal apparatus 100 determines whether the orientation of the light receiving element 121 specified in step S431 is upward.

When the orientation of the light receiving element 121 specified in step S431 is not upward (step S432: NO), in step S433, the terminal apparatus 100 determines not to apply time diversity to optical communication for DL or to make the time interval T shorter than the reference time interval.

On the other hand, when the orientation of the light receiving element 121 specified in step S431 is upward (step S432: YES), in step S434, the terminal apparatus 100 determines to apply time diversity to the optical communication for DL or to set the time interval T to the reference time interval (which may mean making the time interval T wider than the reference time interval).

In step S435, the terminal apparatus 100 determines whether the orientation of the light emitting element 111 specified in step S431 is downward.

When the orientation of the light emitting element 111 specified in step S431 is not downward (step S435: NO), in step S436, the terminal apparatus 100 determines not to apply time diversity to optical communication for UL or to make the time interval T shorter than the reference time interval.

On the other hand, when the orientation of the light emitting element 111 specified in step S431 is downward (step S435: YES), in step S437, the terminal apparatus 100 determines to apply time diversity to the optical communication for UL or to set the time interval T to the reference time interval (which may mean making the time interval T wider than the reference time interval).

### (7) Notification Method of Time Diversity Information

Next, on the premise of the above-mentioned time diversity control, first to third examples of a notification method of time diversity information according to an embodiment will be described. The first and second examples are examples in which the base station apparatus 200 takes the initiative in performing time diversity control, while the third example is an example in which the terminal apparatus 100 takes the initiative in performing time diversity control. Note that in the following description, optical communication will be assumed to be performed in the ocean as an example of underwater communication, but optical communication may be performed in a lake or a river.

### (7.1) First Example

In a first example, the base station apparatus 200 collectively determines whether to apply time diversity to optical communication and/or the time interval T of time diversity for each terminal apparatus 100 within its own cell. The base station apparatus 200 transmits (notifies) information indicating the determined content to each terminal apparatus 100 within its own cell by broadcast.

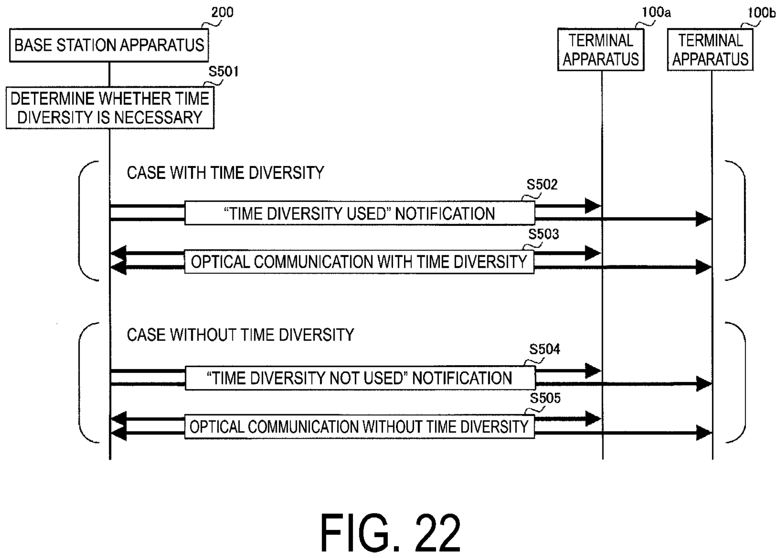

FIG. 22 is a diagram illustrating a first example of a notification method of time diversity information.

In step S501, the base station apparatus 200 determines whether time diversity is necessary (and/or the time interval T of time diversity).

For example, the base station apparatus 200 may acquire wind speed information from an anemometer on a marine buoy or weather information via the network 10, and determine that time diversity is not necessary when the wind speed is equal to or higher than a threshold value, and determine that time diversity is necessary when the wind speed is lower than the threshold value.

The base station apparatus 200 may acquire wave information from an accelerometer on a marine buoy or weather information via the network 10, and determine that time diversity is not necessary when the waves on the sea surface are equal to or higher than a threshold value, and determine that time diversity is necessary when the waves on the sea surface are lower than the threshold value.

The base station apparatus 200 may acquire sunlight information from an illuminometer or a solar panel power generation amount on a marine buoy or weather information via the network 10, and determine that time diversity is not necessary when the amount of sunlight at sea is less than a threshold value, and determine that time diversity is necessary when the amount of sunlight at sea is equal to or greater than the threshold value.

The base station apparatus 200 may acquire time information from its own built-in clock or via the network 10, and determine that time diversity is not necessary when it is near sunrise/sunset or after sunset, and that time diversity is necessary during the day (high in the day).

The base station apparatus 200 may acquire depth information of its own apparatus using its own depth meter or a preset at the time of installation of the own apparatus, and determine that time diversity is not necessary when the water depth of the own apparatus is equal to or greater than a threshold value, and determine that time diversity is necessary when the water depth of the own apparatus is less than the threshold value.

When the base station apparatus 200 divides cells based on direction, the base station apparatus 200 may acquire information on the orientation (direction information) of the light receiving/emitting elements used for optical communication, and determine that UL time diversity is necessary when the light receiving element direction is upward, determine that DL time diversity is necessary when the light emitting element direction is downward, and determine that time diversity is not necessary in any other cases.

When it is determined in step S501 that time diversity is necessary, in step S502, the base station apparatus 200 transmits information indicating the determined content (here, time diversity used) to each terminal apparatus 100 within its own cell by broadcast. In this case, the base station apparatus 200 and each terminal apparatus 100 perform optical communication to which time diversity is applied (step S503).

On the other hand, when it is determined in step S501 that time diversity is not necessary, in step S504, the base station apparatus 200 transmits information indicating the determined content (here, time diversity not used) to each terminal apparatus 100 within its own cell by broadcast. In this case, the base station apparatus 200 and each terminal apparatus 100 perform optical communication to which time diversity is not applied (step S505).

### (7.2) Second Example

In a second example, the base station apparatus 200 individually determines whether to apply time diversity to optical communication and/or the time interval T of time diversity for each terminal apparatus 100 within the cell. The base station apparatus 200 transmits (notifies) information indicating the determined content to each terminal apparatus 100 within the cell by unicast.

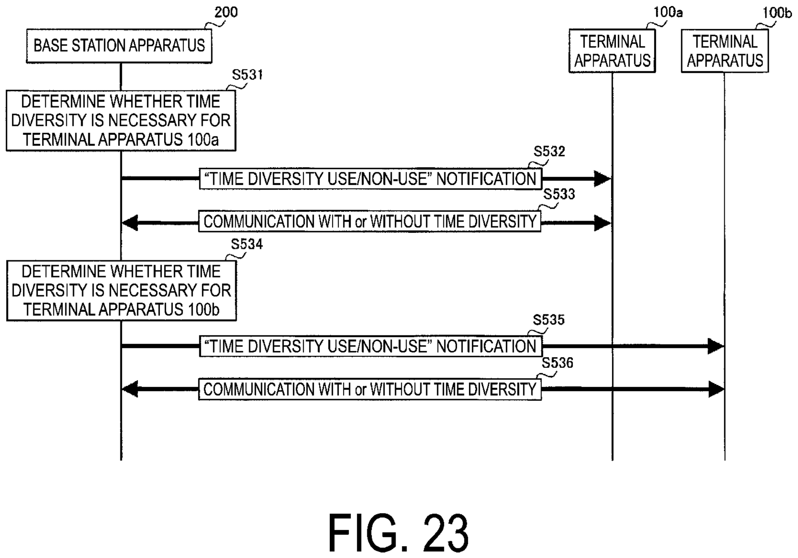

FIG. 23 is a diagram illustrating a second example of a notification method of time diversity information.

In step S531, the base station apparatus 200 determines whether time diversity is necessary for the terminal apparatus 100a (and/or the time interval T of time diversity).

For example, in addition to or instead of the determination method described in the first example, the base station apparatus 200 may acquire the direction of the light receiving/emitting element used for optical communication with the terminal apparatus 100a, and determine that UL time diversity is necessary when the light receiving element direction is upward, determine that DL time diversity is necessary when the light emitting element direction is downward, and determine that time diversity is not necessary in any other cases.

In step S532, the base station apparatus 200 notifies the terminal apparatus 100a of information indicating the content determined in step S531. In this case, the base station apparatus 200 and the terminal apparatus 100a perform optical communication to which time diversity is applied or not applied depending on the content determined in step S531 (step S533).

In step S534, the base station apparatus 200 determines whether time diversity is necessary for the terminal apparatus 100b (and/or the time interval T of time diversity).

For example, in addition to or instead of the determination method described in the first example, the base station apparatus 200 may acquire the direction of the light receiving/emitting element used for optical communication with the terminal apparatus 100b, and determine that UL time diversity is necessary when the light receiving element direction is upward, determine that DL time diversity is necessary when the light emitting element direction is downward, and determine that time diversity is not necessary in any other cases.

In step S535, the base station apparatus 200 notifies the terminal apparatus 100b of information indicating the content determined in step S534. In this case, the base station apparatus 200 and the terminal apparatus 100b perform optical communication to which time diversity is applied or not applied depending on the content determined in step S534 (step S536).

### (7.3) Third Example

In a third example, each terminal apparatus 100 determines whether to apply time diversity to optical communication and/or the time interval T of time diversity, and transmits information indicating the determined content to the base station apparatus 200.

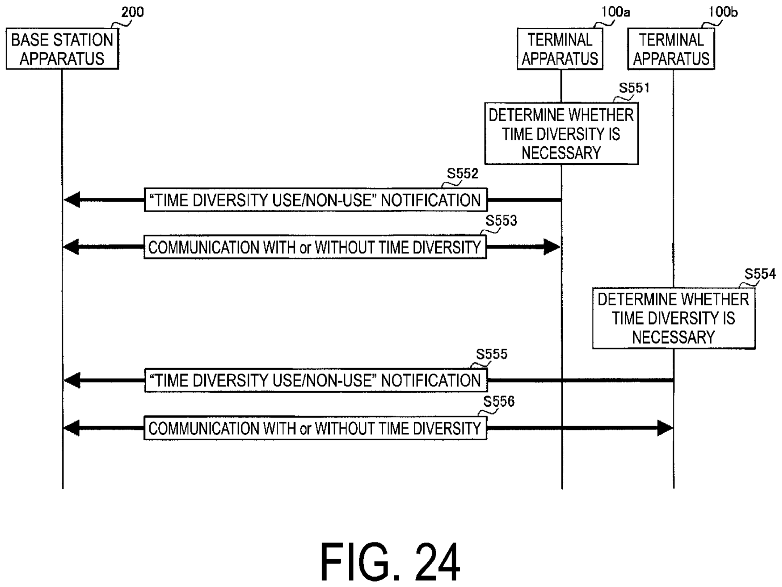

FIG. 24 is a diagram illustrating a third example of a notification method of time diversity information.

In step S551, the terminal apparatus 100a determines whether time diversity is necessary (and/or the time interval T of time diversity).

For example, in addition to or instead of the determination method described in the first example, the terminal apparatus 100a may acquire information on the direction of the light receiving/emitting element used for optical communication with the base station apparatus 200, and determine that DL time diversity is necessary when the light receiving element direction is upward, determine that UL time diversity is necessary when the light emitting element direction is downward, and determine that time diversity is not necessary in any other cases.

In step S552, the terminal apparatus 100a notifies the base station apparatus 200 of information indicating the content determined in step S551. In this case, the base station apparatus 200 and the terminal apparatus 100a perform optical communication to which time diversity is applied or not applied depending on the content determined in step S551 (step S553).

In step S554, the terminal apparatus 100b determines whether time diversity is necessary (and/or the time interval T of time diversity).

For example, in addition to or instead of the determination method described in the first example, the terminal apparatus 100b may acquire information on the direction of the light receiving/emitting element used for optical communication with the base station apparatus 200, and determine that DL time diversity is necessary when the light receiving element direction is upward, determine that UL time diversity is necessary when the light emitting element direction is downward, and determine that time diversity is not necessary in any other cases.

In step S555, the terminal apparatus 100b notifies the base station apparatus 200 of information indicating the content determined in step S554. In this case, the base station apparatus 200 and the terminal apparatus 100b perform optical communication to which time diversity is applied or not applied depending on the content determined in step S554 (step S556).

Note that in the present example, the description is made on the premise that the base station apparatus 200 accepts the contents determined by the terminal apparatus 100 (notifications in steps S552 and S555). However, the base station apparatus 200 may be able to reject the content determined by the terminal apparatus 100. Under such a premise, the base station apparatus 200 may notify the terminal apparatus 100 of whether the content determined by the terminal apparatus 100 is accepted (that is, OK/NG). When NG, the base station apparatus 200 may notify the terminal apparatus 100 of time diversity information determined by the base station apparatus 200 itself.

### (8) Other Embodiments

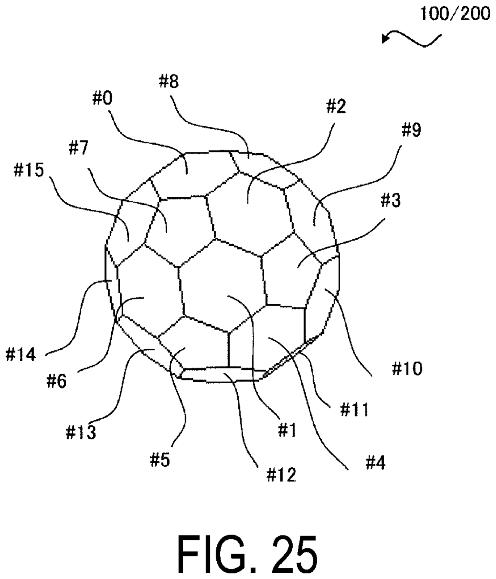

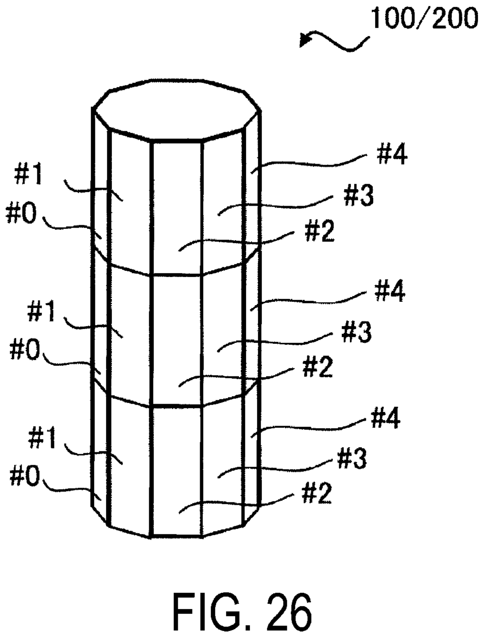

In the above-described embodiments, an example in which the optical communicator 150 of the terminal apparatus 100 and the optical communicator 250 of the base station apparatus 200 are formed into a hemispherical shape has been described. However, the terminal apparatus 100 and/or the base station apparatus 200 may be configured in a polyhedral shape (mirror ball shape) as a whole, as illustrated in FIG. 25. For example, the terminal apparatus 100 and/or the base station apparatus 200 may form a polyhedron, each surface (#0, #1, ...) of the polyhedron may form a light receiving/emitting region, and at least one pair of a light emitting element and a light receiving element may be disposed on each surface. Alternatively, the terminal apparatus 100 and/or the base station apparatus 200 may be configured in a rod shape as a whole, as illustrated in FIG. 26. For example, the terminal apparatus 100 and/or the base station apparatus 200 may form a rectangular prism, the side surfaces (#0, #1, ...) of the rectangular prism may form a light receiving/emitting region, and at least one pair of a light emitting element and a light receiving element may be disposed on each of the side surfaces.

A program that causes a computer to execute each piece of processing performed by the terminal apparatus 100 or the base station apparatus 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing each piece of processing performed by the terminal apparatus 100 or the base station apparatus 200 may be integrated, and at least a part of the terminal apparatus 100 or the base station apparatus 200 may be configured as a semiconductor integrated circuit (a chipset, or a System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least in part on." The phrase "depending on" means both "only depending on" and "at least partially depending on." The terms "include," "comprise" and variations thereof do not mean "include only items stated" but instead mean "may include only items stated" or "may include not only the items stated but also other items." The term "or" used in the present disclosure is not intended to be "exclusive or." For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

The present application claims priority to Japanese Patent Application No. 2023-060558 (filed on April 4, 2023), the contents of which are incorporated herein by reference in their entirety.

### (9) Supplementary Notes

Features relating to the embodiments described above will be described below as supplementary notes.

### Supplementary Note 1

An optical communication system (1) for performing optical communication, which is wireless communication using light, underwater, the optical communication system (1) including:
a base station apparatus (200) configured to form a cell underwater; and
a terminal apparatus (100) configured to perform the optical communication with the base station apparatus (200) in the cell,
in which at least one of the base station apparatus (200) or the terminal apparatus (100) performs the optical communication to which time diversity is applied in which optical signal transmission corresponding to identical transmission information is repeatedly performed at a predetermined time interval.

### Supplementary Note 2

The optical communication system (1) according to Supplementary Note 1, in which at least one of the base station apparatus (200) or the terminal apparatus (100)
acquires a communication environment parameter that is a parameter related to caustics, which is a light-concentrating phenomenon caused by refraction of sunlight on a water surface, and that affects communication quality of the optical communication, and controls the time diversity based on the communication environment parameter.

### Supplementary Note 3

The optical communication system (1) according to Supplementary Note 2, in which at least one of the base station apparatus (200) or the terminal apparatus (100) determines whether to apply the time diversity to the optical communication based on the communication environment parameter.

### Supplementary Note 4

The optical communication system (1) according to Supplementary Note 2 or 3, in which at least one of the base station apparatus (200) or the terminal apparatus (100) determines the predetermined time interval based on the communication environment parameter.

### Supplementary Note 5

The optical communication system (1) according to any one of Supplementary Notes 2 to 4, in which at least one of the base station apparatus (200) or the terminal apparatus (100) acquires the communication environment parameter based on at least one selected from the group consisting of an output of a measurer provided on the water surface or above water, information provided from an information providing apparatus via a network, an output of a measurer provided in the base station apparatus (200), and an output of a measurer provided in the terminal apparatus (100).

### Supplementary Note 6

The optical communication system (1) according to any one of Supplementary Notes 2 to 5, in which the communication environment parameter includes at least one of a parameter indicating a wind speed on water or a parameter indicating a state of a wave.

### Supplementary Note 7

The optical communication system (1) according to Supplementary Note 6, in which at least one of the base station apparatus (200) or the terminal apparatus (100) determines at least one of not applying the time diversity to the optical communication or making the predetermined time interval shorter than a reference time interval based on at least one of a value of the parameter indicating the wind speed being equal to or greater than a threshold value or a value of the parameter indicating the state of the wave being equal to or greater than a threshold value.

### Supplementary Note 8

The optical communication system (1) according to any one of Supplementary Notes 2 to 7, in which the communication environment parameter includes at least one of a parameter indicating an intensity of the sunlight incident on the water surface or a parameter indicating an angle of incidence of the sunlight with respect to the water surface.

### Supplementary Note 9

The optical communication system (1) according to Supplementary Note 8, in which at least one of the base station apparatus (200) or the terminal apparatus (100) determines at least one of not applying the time diversity to the optical communication or making the predetermined time interval shorter than a reference time interval based on at least one of a value of the parameter indicating the intensity being less than a threshold value or a value of the parameter indicating the angle of incidence being less than a threshold value.

### Supplementary Note 10

The optical communication system (1) according to any one of Supplementary Notes 2 to 9, in which the communication environment parameter includes at least one of a parameter indicating a water depth of the base station apparatus (200) or a parameter indicating a water depth of the terminal apparatus (100).

### Supplementary Note 11

The optical communication system (1) according to Supplementary Note 10, in which at least one of the base station apparatus (200) or the terminal apparatus (100) determines at least one of not applying the time diversity to the optical communication or making the predetermined time interval shorter than a reference time interval based on a value of the parameter indicating the water depth being equal to or greater than a threshold value.

### Supplementary Note 12

The optical communication system (1) according to any one of Supplementary Notes 2 to 11, in which the communication environment parameter includes at least one of a parameter indicating an orientation of a light receiving element and/or a light emitting element of the base station apparatus (200) used in the optical communication or a parameter indicating an orientation of a light receiving element and/or a light emitting element of the terminal apparatus (100) used for the optical communication.

### Supplementary Note 13

The optical communication system (1) according to Supplementary Note 12, in which at least one of the base station apparatus (200) or the terminal apparatus (100) determines at least one of not applying the time diversity to the optical communication or making the predetermined time interval shorter than a reference time interval based on the orientation of the light receiving element not being upward.

### Supplementary Note 14

The optical communication system (1) according to Supplementary Note 13, in which the base station apparatus (200)
determines to apply the time diversity to the optical communication of an uplink based on the orientation of the light receiving element of the base station apparatus (200) used for the optical communication being upward, and
determines to apply the time diversity to the optical communication of a downlink based on the orientation of the light emitting element of the base station apparatus (200) used for the optical communication being downward.

### Supplementary Note 15

The optical communication system (1) according to Supplementary Note 13 or 14, in which the terminal apparatus (100)
determines to apply the time diversity to the optical communication of a downlink based on the orientation of the light receiving element of the terminal apparatus (100) used for the optical communication being upward, and
determines to apply the time diversity to the optical communication of an uplink based on the orientation of the light emitting element of the terminal apparatus (100) used for the optical communication being downward.

### Supplementary Note 16

The optical communication system (1) according to any one of Supplementary Notes 2 to 15, in which the base station apparatus (200)
collectively determines whether to apply the time diversity to the optical communication and/or the predetermined time interval for each terminal apparatus (100) within the cell, and transmits information indicating the determined content to each terminal apparatus (100) within the cell by broadcast.

### Supplementary Note 17

The optical communication system (1) according to any one of Supplementary Notes 2 to 15, in which the base station apparatus (200)
individually determines whether to apply the time diversity to the optical communication and/or the predetermined time interval for each terminal apparatus (100) within the cell, and transmits information indicating the determined content to each terminal apparatus (100) within the cell by unicast.

### Supplementary Note 18

The optical communication system (1) according to any one of Supplementary Notes 2 to 15, in which the terminal apparatus (100)
determines whether to apply the time diversity to the optical communication and/or the predetermined time interval, and
transmits information indicating the determined content to the base station apparatus (200).

### Supplementary Note 19

A base station apparatus (200) for forming a cell underwater, the base station apparatus (200) including:
an optical communicator (210, 220) configured to perform optical communication, which is wireless communication using light, with a terminal apparatus (100) within the cell; and
a controller (230) configured to control the optical communicator (210, 220) to apply time diversity to the optical communication in which optical signal transmission corresponding to identical transmission information is repeatedly performed at a predetermined time interval.

### Supplementary Note 20

A terminal apparatus (100) for performing optical communication, which is wireless communication using light, underwater, the terminal apparatus (100) including:
an optical communicator (110, 120) configured to perform the optical communication with the base station apparatus (200) in a cell formed by the base station apparatus (200) underwater;
   and
a controller (130) configured to control the optical communicator (110, 120) to apply time diversity to the optical communication in which optical signal transmission corresponding to identical transmission information is repeatedly performed at a predetermined time interval.

### REFERENCE SIGNS

1: Optical communication system
10: Network
100: Terminal apparatus
110: Light emitter
111: Light emitting element
112: Transmitter
120: Light receiver
121: Light receiving element
122: Receiver
130: Controller
131: Processor
132: Memory
150: Optical communicator
151: Light receiving/emitting region
160: Body portion
170: Measurer
200: Base station apparatus
210: Light emitter
211: Light emitting element
212: Transmitter
220: Light receiver
221: Light receiving element
222: Receiver
230: Controller
231: Processor
232: Memory
240: Backhaul communicator
241: Network communicator
242: Inter-base station communicator
250: Optical communicator
251: Light receiving/emitting region
260: Body portion
270: Measurer

## Claims

1. An optical communication system for performing optical communication, which is wireless communication using light, underwater, the optical communication system comprising:
a base station apparatus configured to form a cell underwater; and
a terminal apparatus configured to perform the optical communication with the base station apparatus in the cell,
wherein at least one of the base station apparatus or the terminal apparatus performs the optical communication to which time diversity is applied in which optical signal transmission corresponding to identical transmission information is repeatedly performed at a predetermined time interval.

2. The optical communication system according to claim 1, wherein at least one of the base station apparatus or the terminal apparatus
acquires a communication environment parameter that is a parameter related to caustics, which is a light-concentrating phenomenon caused by refraction of sunlight on a water surface, and that affects communication quality of the optical communication, and
controls the time diversity based on the communication environment parameter.

3. The optical communication system according to claim 2, wherein at least one of the base station apparatus or the terminal apparatus determines whether to apply the time diversity to the optical communication based on the communication environment parameter.

4. The optical communication system according to claim 2, wherein at least one of the base station apparatus or the terminal apparatus determines the predetermined time interval based on the communication environment parameter.

5. The optical communication system according to claim 2, wherein at least one of the base station apparatus or the terminal apparatus acquires the communication environment parameter based on at least one selected from the group consisting of an output of a measurer provided on the water surface or above water, information provided from an information providing apparatus via a network, an output of a measurer provided in the base station apparatus, and an output of a measurer provided in the terminal apparatus.

6. The optical communication system according to any one of claims 2 to 5, wherein the communication environment parameter comprises at least one of a parameter indicating a wind speed on water or a parameter indicating a state of a wave.

7. The optical communication system according to claim 6, wherein at least one of the base station apparatus or the terminal apparatus determines at least one of not applying the time diversity to the optical communication or making the predetermined time interval shorter than a reference time interval based on at least one of a value of the parameter indicating the wind speed being equal to or greater than a threshold value or a value of the parameter indicating the state of the wave being equal to or greater than a threshold value.

8. The optical communication system according to any one of claims 2 to 5, wherein the communication environment parameter comprises at least one of a parameter indicating an intensity of the sunlight incident on the water surface or a parameter indicating an angle of incidence of the sunlight with respect to the water surface.

9. The optical communication system according to claim 8, wherein at least one of the base station apparatus or the terminal apparatus determines at least one of not applying the time diversity to the optical communication or making the predetermined time interval shorter than a reference time interval based on at least one of a value of the parameter indicating the intensity being less than a threshold value or a value of the parameter indicating the angle of incidence being less than a threshold value.

10. The optical communication system according to any one of claims 2 to 5, wherein the communication environment parameter comprises at least one of a parameter indicating a water depth of the base station apparatus or a parameter indicating a water depth of the terminal apparatus.

11. The optical communication system according to claim 10, wherein at least one of the base station apparatus or the terminal apparatus determines at least one of not applying the time diversity to the optical communication or making the predetermined time interval shorter than a reference time interval based on a value of the parameter indicating the water depth being equal to or greater than a threshold value.

12. The optical communication system according to any one of claims 2 to 5, wherein the communication environment parameter comprises at least one of a parameter indicating an orientation of a light receiving element and/or a light emitting element of the base station apparatus used in the optical communication or a parameter indicating an orientation of a light receiving element and/or a light emitting element of the terminal apparatus used for the optical communication.

13. The optical communication system according to claim 12, wherein at least one of the base station apparatus or the terminal apparatus determines at least one of not applying the time diversity to the optical communication or making the predetermined time interval shorter than a reference time interval based on the orientation of the light receiving element not being upward.

14. The optical communication system according to claim 13, wherein the base station apparatus
determines to apply the time diversity to the optical communication of an uplink based on the orientation of the light receiving element of the base station apparatus used for the optical communication being upward, and
determines to apply the time diversity to the optical communication of a downlink based on the orientation of the light emitting element of the base station apparatus used for the optical communication being downward.

15. The optical communication system according to claim 13, wherein the terminal apparatus
determines to apply the time diversity to the optical communication of a downlink based on the orientation of the light receiving element of the terminal apparatus used for the optical communication being upward, and
determines to apply the time diversity to the optical communication of an uplink based on the orientation of the light emitting element of the terminal apparatus used for the optical communication being downward.

16. The optical communication system according to any one of claims 2 to 5, wherein the base station apparatus
collectively determines whether to apply the time diversity to the optical communication and/or the predetermined time interval for each terminal apparatus within the cell, and
transmits information indicating the determined content to each terminal apparatus within the cell by broadcast.

17. The optical communication system according to any one of claims 2 to 5, wherein the base station apparatus
individually determines whether to apply the time diversity to the optical communication and/or the predetermined time interval for each terminal apparatus within the cell, and
transmits information indicating the determined content to each terminal apparatus within the cell by unicast.

18. The optical communication system according to any one of claims 2 to 5, wherein the terminal apparatus
determines whether to apply the time diversity to the optical communication and/or the predetermined time interval, and
transmits information indicating the determined content to the base station apparatus.

19. A base station apparatus for forming a cell underwater, the base station apparatus comprising:
an optical communicator configured to perform optical communication, which is wireless communication using light, with a terminal apparatus within the cell; and
a controller configured to control the optical communicator to apply time diversity to the optical communication in which optical signal transmission corresponding to identical transmission information is repeatedly performed at a predetermined time interval.

20. A terminal apparatus for performing optical communication, which is wireless communication using light, underwater, the terminal apparatus comprising:
an optical communicator configured to perform the optical communication with the base station apparatus in a cell formed by the base station apparatus underwater; and
a controller configured to control the optical communicator to apply time diversity to the optical communication in which optical signal transmission corresponding to identical transmission information is repeatedly performed at a predetermined time interval.
